(19) Europäisches Patentamt
European Patent Office
Office européen des brevets

(11) **EP 2 565 002 B1**

(12) **EUROPEAN PATENT SPECIFICATION**

(45) Date of publication and mention
of the grant of the patent:
**16.04.2014 Bulletin 2014/16**

(51) Int Cl.:
**B28B 11/12** *(2006.01)* **B28B 11/16** *(2006.01)*
**B23K 26/40** *(2014.01)*

(21) Application number: **12150012.8**

(22) Date of filing: **02.01.2012**

(54) **A method for cutting honeycomb molded body and a method for manufacturing honeycomb structured body**

Verfahren zum Schneiden von wabenförmig strukturierten Körpern und Verfahren zur Herstellung eines wabenförmig strukturierten Körpers

Procédé de découpage de corps moulé en nid d'abeille et procédé de fabrication de corps structuré en nid d'abeille

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.09.2011 PCT/JP2011/070031**

(43) Date of publication of application:
**06.03.2013 Bulletin 2013/10**

(73) Proprietor: **Ibiden Co., Ltd.**
**Ogaki-shi**
**Gifu 503-8604 (JP)**

(72) Inventors:
• **Masuda, Kenta**
**Gifu, 501-0695 (JP)**
• **Kiriyama, Katsuyuki**
**Gifu, 501-0695 (JP)**

(74) Representative: **HOFFMANN EITLE**
**Patent- und Rechtsanwälte**
**Arabellastrasse 4**
**81925 München (DE)**

(56) References cited:
**EP-A1- 1 116 563      EP-A1- 2 315 508**
**JP-B2- 3 926 087**

**Description**

TECHNICAL FIELD

The present invention relates to a method for cutting a honeycomb molded body and a method for manufacturing a honeycomb structured body.

BACKGROUND ART

Recently, particulates (hereinafter, also referred to as PM) such as soot and other toxic components contained in exhaust gases discharged from internal combustion engines of vehicles such as cars, buses, and trucks, construction machines and the like, have raised problems as contaminants harmful to the environment and the human body. Various honeycomb structured bodies made of porous ceramics have been proposed as a honeycomb filter for purifying exhaust gases by capturing PM in the exhaust gases.

In production of such a honeycomb structured body, ceramic raw material powder and a mixture containing a binder are mixed so that a wet mixture is prepared. Next, the wet mixture is extrusion-molded to be formed into a honeycomb molded body. The honeycomb molded body is then cut to a predetermined length by a molded body cutting device.

Subsequently, the cut honeycomb molded bodies each have one end portion filled with a sealing material paste such that their end portions are alternately sealed. The sealed honeycomb molded bodies are dried, degreased, and fired to provide honeycomb fired bodies.

Then, the plurality of honeycomb fired bodies thus obtained are bonded to one another via an adhesive paste applied to their side faces. Finally, a coat material paste is applied to the periphery of the obtained aggregated body to form a coat layer. In this manner, a honeycomb structured body is manufactured.

In the present description, a face where cells are exposed is referred to as an end face and a face other than the end face is referred to as a side face, with regard to the faces constituting the peripheral faces of a honeycomb molded body, honeycomb fired body, or honeycomb structured body. In addition, a wall present between cells is referred to as a cell wall and a peripheral part formed to surround a large number of cells is referred to as a peripheral wall.

Recently, there has been a demand for volume reduction of large honeycomb structured bodies (honeycomb filters) used in heavy vehicles such as buses and trucks in order to install the honeycomb structured body in the bottom portion of the vehicles.

However, the pressure loss of the honeycomb structured body increases along with reduction in the volume thereof. Therefore, it is demanded to suppress the increase in the pressure loss of the honeycomb structured body by thinning cell walls of the honeycomb structured body to enhance the exhaust-gas purification performance of the honeycomb structured body.

If the thickness of a cell wall in a honeycomb fired body constituting a honeycomb structured body is reduced (e.g. less than 0.2 mm), a honeycomb molded body may not be formed as appropriate. Specifically, if a portion which is to be a cell wall is too thin, deformation such as buckling may appear in a peripheral wall and the cell wall during cutting of an extrusion-molded honeycomb molded body with a wire or the like. As a result, problematically, the honeycomb molded body cannot maintain the predetermined shape during its cutting.

For' solving the above problem, Patent Document 1 discloses a method for cutting a honeycomb molded body. In the method, a directional groove for cut is formed on the periphery of the honeycomb molded body to a depth equal to or deeper than the thickness of the periphery in a direction substantially orthogonal to the direction of a through hole using a means such as a knife, rotary blade, laser, water jet or the like. Then, a fine wire is positioned along the formed directional groove for cut and the honeycomb molded body is simply pressed to the wire to be cut.

EP 2 315 508 A1 relates to a ceramic assembled board and a manufacturing method for a substrate. In the method, a sintered ceramic circuit substrate is cut, using in one embodiment a fiber laser for forming continuous grooves for dividing.

JP 3 926 087 B2 relates to a means for fast precision drilling and for free alignment of drilling in green sheet working by a laser.

Patent Document 1: JP-A 2001-096524

DISCLOSURE OF THE INVENTION

PROBLEMS TO BE SOLVED BY THE INVENTION

In the conventional method for cutting a honeycomb molded body disclosed in Patent Document 1, formation of a directional groove for cut by application of a physical force may cause deformation such as buckling in the honeycomb molded body. Therefore, there is a demand for a method for cutting a honeycomb molded body that allows non-contact cutting of the periphery of honeycomb molded bodies and is suitably used in mass production.

The present invention is devised with an aim of solving the above problem and is aimed to provide a method for cutting a honeycomb molded body which causes no deformation such as buckling in a honeycomb molded body made of a material containing silicon carbide to enhance the cutting accuracy, and also to provide a method for manufacturing a honeycomb structured body.

MEANS FOR SOLVING THE PROBLEMS

To achieve the above aim, a method for cutting a honeycomb molded body being a pillar-shaped honeycomb molded body that is made of a material including silicon carbide, is manufactured by extrusion molding, and has a large number of cells placed in parallel with one another in a longitudinal direction with a cell wall interposed therebetween and a peripheral wall formed on each side face, to a predetermined length in a direction vertical to the longitudinal direction, according to claim 1 comprises the steps of: forming a cut guide groove on the periphery of the honeycomb molded body by applying laser in a wavelength range of 0.7 to 2.5 $\mu$m; and cutting the honeycomb molded body along the cut guide groove with a wire.

The method for cutting a honeycomb molded body according to claim 1 includes formation of a cut guide groove on the periphery of the honeycomb molded body by application of laser in a wavelength range of 0.7 to 2.5 $\mu$m. Therefore, the cut guide groove can be formed in a non-contact manner, namely, without applying a physical force to the peripheral wall of the honeycomb molded body. As a result, deformation such as buckling is hardly caused in the peripheral wall and in the cell wall of the honeycomb molded body during formation of the cut guide groove.

Once the cut guide groove is formed in the peripheral wall of the honeycomb molded body, there is no thick part in a to-be-cut portion. Accordingly, it is possible to cut the honeycomb molded body with a wire without causing deformation such as buckling therein.

The laser in a wavelength range of 0.7 to 2.5 $\mu$m has small reflectance, though it also has small the absorbance of silicon carbide. Then, the energy amount of usable laser light is relatively increased, enhancing the formation accuracy of the cut guide groove in the honeycomb molded body.

In addition, the laser in a wavelength range of 0.7 to 2.5 $\mu$m has a smaller spot size compared to $CO_2$ laser. This increases the number of laser irradiations required to form a cut guide groove having a predetermined width and a predetermined depth. However, the smaller spot size increases the focus depth of the laser light, reducing the influence by heat and the like during the laser irradiation. Consequently, it is possible to shorten the time to form the cut guide groove.

In the method for cutting a honeycomb molded body according to claim 2, the laser is fiber laser.

Fiber laser has a smaller spot size compared to $CO_2$ laser. This increases the number of laser irradiation required for forming a cut guide groove having a predetermined width and a predetermined depth. However, the smaller spot size increases the focus depth of the laser light, reducing the influence by heat and the like during the laser irradiation. Consequently, it is possible to shorten the time to form the cut guide groove.

In the method for cutting a honeycomb molded body according to claim 3, the cut guide groove is formed only to a depth corresponding to the peripheral wall. The phrase "formed only to a depth corresponding to the peripheral wall" refers to formation of a peripheral wall having a depth equal to the thickness of the peripheral wall.

In the case where the cut guide groove is formed only to a depth corresponding to the peripheral wall, namely, in the case where the depth of the cut guide groove is same as the thickness of the peripheral wall, the to-be-cut portion does not have a part thicker than the cell wall. Accordingly, in the subsequent cutting process, the wire does not cause any deformation such as buckling in the honeycomb molded body and can cut the honeycomb molded body in a short time.

In the method for cutting a honeycomb molded body according to claim 4, the cut guide groove is formed to a depth corresponding to the peripheral wall and at least one cell wall.

If the cut guide groove is formed to a depth corresponding to the peripheral wall and at least one cell wall, the peripheral wall is completely cut. Therefore, in the subsequent cutting process, the wire does not cause any deformation such as buckling in the honeycomb molded body and can cut the honeycomb molded body in a short time.

In addition, in the case where the peripheral wall and at least one cell wall are cut by application of laser during formation of the cut guide groove, the peripheral wall is completely cut and at least one cell wall underneath the peripheral wall is cut. Accordingly, the minor adjustment of the cutting site is not needed.

In the method for cutting a honeycomb molded body according to claim 5, the peripheral wall has a thickness of 0.2 to 0.5 mm.

When the peripheral wall has a thickness within the above range, it is possible to avoid damage and the like caused by pressure application from the outside during or after the manufacturing of the honeycomb structured body because the peripheral wall is thick even in the case where the cell wall is thinned (e.g. 0.1 mm or more and less than 0.2 mm). Use of the method according to claim 1 enables cutting of the honeycomb molded body without causing deformation such as buckling even in the case where the peripheral wall is thick.

The peripheral wall serves as an external frame to maintain the predetermined shape of the honeycomb molded body. When the thickness is less than 0.2 mm, the peripheral wall is less likely to function as the external frame because it is too thin. Then, deformation such as buckling easily appears in the cell wall during cutting of the honeycomb molded body with a wire even if the cut guide groove is formed by application of laser. In addition, such a honeycomb molded body, honeycomb fired body, or honeycomb structured body is easily damaged by pressure application from the outside.

On the other hand, in the case where the peripheral wall is thicker than 0.5 mm, it is difficult to secure the sufficient volume to function as a filter because the peripheral wall is too thick. In addition, it takes too much time to form a cut guide groove by application of laser.

In the method for cutting a honeycomb molded body according to claim 6, the cell wall has a thickness of 0.1mm or more and less than 0.2 mm.

When the thickness of the cell wall is 0.1 mm or more and less than 0.2 mm, an obtainable honeycomb structured body (honeycomb filter) including a honeycomb fired body manufactured by firing such a honeycomb molded body has a low pressure loss.

If the cell wall is thinner than 0.1 mm, such a cell wall is too thin and only a slight pressure applied thereto causes deformation such as buckling in the cell wall of the honeycomb molded body. On the other hand, if the cell wall is 0.2 mm or thicker, it takes too much time to cut the honeycomb molded body.

In the method for cutting a honeycomb molded body according to claim 7, the cut guide groove has a width of 0.5 to 1.0 mm.

When the cut guide groove has a width of 0.5 to 1.0 mm, the honeycomb molded body is surely cut with a wire within the width of the cut guide groove and the width needed for cutting can be narrowed as far as possible.

In the method for cutting a honeycomb molded body according to claim 8, the wire has a length of a diameter of 5% to 20% of the length of the width of the cut guide groove.

When the length of the diameter of the wire is less than 5% of the length of the width of the cut guide groove, the wire itself is easily cut during the cutting process as the wire is too fine. On the other hand, when the length of the diameter of the wire is more than 20% of the length of the width of the cut guide groove, the physical force applied to the peripheral wall and the cell wall increases during the cutting process. In such a case, deformation such as buckling easily appears in the honeycomb molded body and the cutting takes too much time.

In the method for cutting a honeycomb molded body according to claim 9, the diameter of the wire is 0.05 to 0.10 mm.

When the diameter of the wire is less than 0.05 mm, the wire itself is easily cut during the cutting process as the wire is too fine. On the other hand, when the diameter of the wire is more than 0.10 mm, the physical force applied to the peripheral wall and the cell wall increase during the cutting process. In such a case, deformation such as buckling easily appears in the honeycomb molded body and the cutting takes too much time.

In the method for cutting a honeycomb molded body according to claim 10, the honeycomb molded body has a cross-sectional shape including at least one linear section in a direction vertical to the longitudinal direction.

If a cut guide groove is formed on the peripheral wall of the side face including the linear section by application of laser, the cut guide groove is formed across the peripheral wall of the honeycomb molded body. Accordingly, in the subsequent cutting with a wire, the pressure is uniformly applied to the entire peripheral wall to be dispersed. Therefore, it is possible to cut the honeycomb molded body without causing deformation such as buckling in the honeycomb molded body.

If the cross-sectional shape of the honeycomb molded body does not have a linear section, the uncut portion of the peripheral wall includes a thick part and a thin part. In such a case, the pressure applied is different from one part to another in accordance with the thickness, resulting in easy appearance of deformation such as buckling.

In the method for cutting a honeycomb molded body according to claim 11, the cross-sectional shape of the honeycomb molded body is quadrangle in a direction vertical to the longitudinal direction.

When the cross-sectional shape of the honeycomb molded body is quadrangle in a direction vertical to the longitudinal direction, a honeycomb structured body can be produced by simply combining honeycomb fired bodies produced through firing of the honeycomb molded bodies.

A method for manufacturing a honeycomb structured body having a plurality of honeycomb fired bodies bound with one another via an adhesive layer formed on each side face, the honeycomb fired bodies being obtained by firing of honeycomb molded bodies each having a large number of cells placed in parallel with one another in a longitudinal direction, according to claim 12 utilizes the method for cutting a honeycomb molded body according to any one of claims 1 to 11 in cutting a honeycomb molded body to a predetermined length.

Therefore, no physical force is applied to the peripheral wall of the honeycomb molded body to form a cut guide groove. Consequently, it is possible to form a cut guide groove without causing deformation such as buckling.

Once a cut guide groove is formed on the peripheral wall of the honeycomb molded body, there is no thick part in the to-be-cut portion. Accordingly, it is possible to cut the honeycomb molded body with a wire without causing deformation such as buckling in the honeycomb molded body.

In the method for manufacturing a honeycomb structured body according to claim 13, the honeycomb structured body has a coat layer formed on a peripheral portion.

BRIEF DESCRIPTION OF THE DRAWINGS

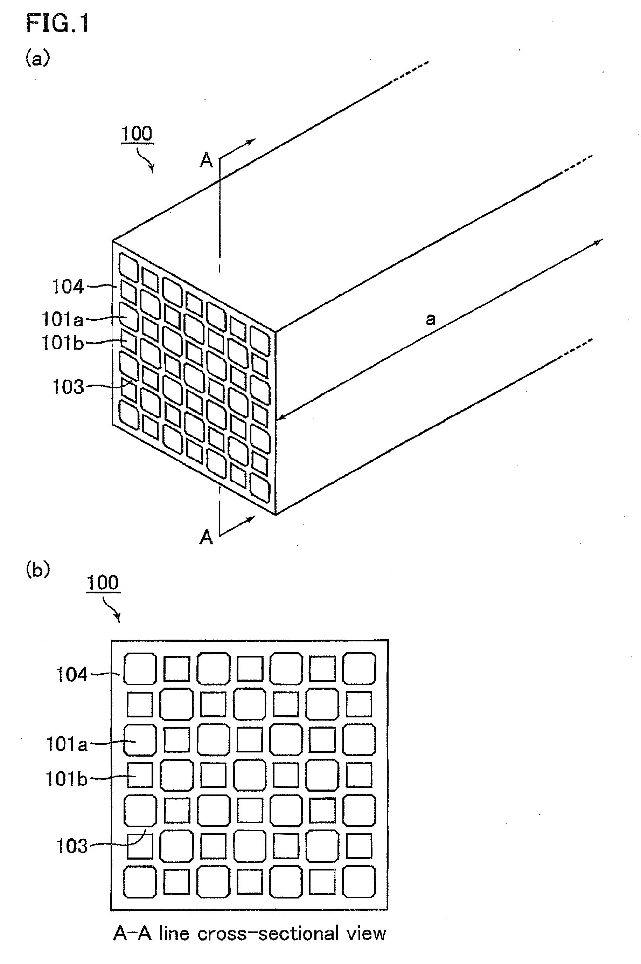

Fig. 1 (a) is a schematic perspective view illustrating one example of a honeycomb molded body to be cut in the method for cutting a honeycomb molded body of a first embodiment of the present invention. Fig. 1 (b) is an A-A line cross-sectional view illustrating the honeycomb molded body in Fig. 1 (a).

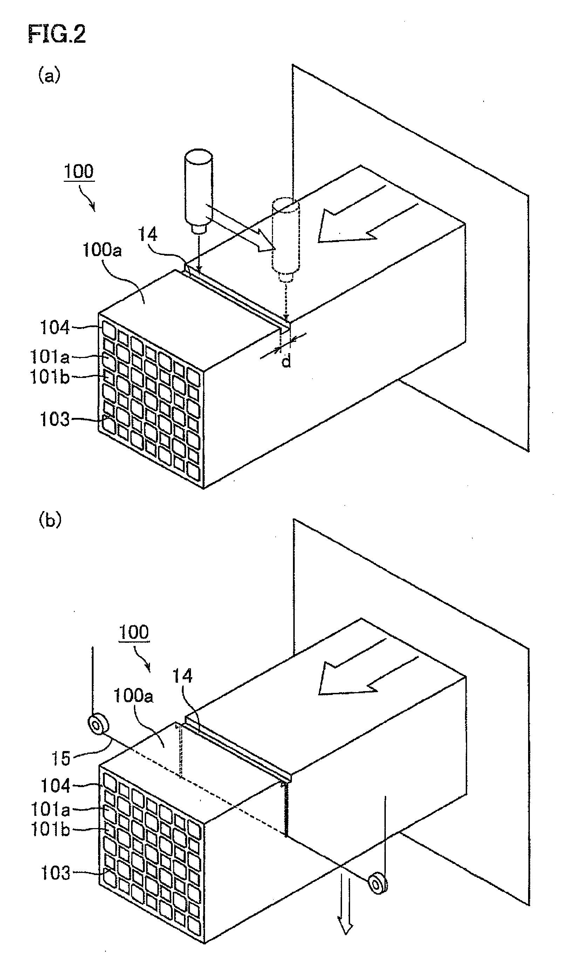

Figs. 2 (a) and 2 (b) are schematic perspective views each illustrating a method for cutting a honeycomb molded body according to the first embodiment of the present invention. Fig. 2(a) illustrates a process of forming a groove. Fig. 2(b) illustrates a process of cutting with a wire.

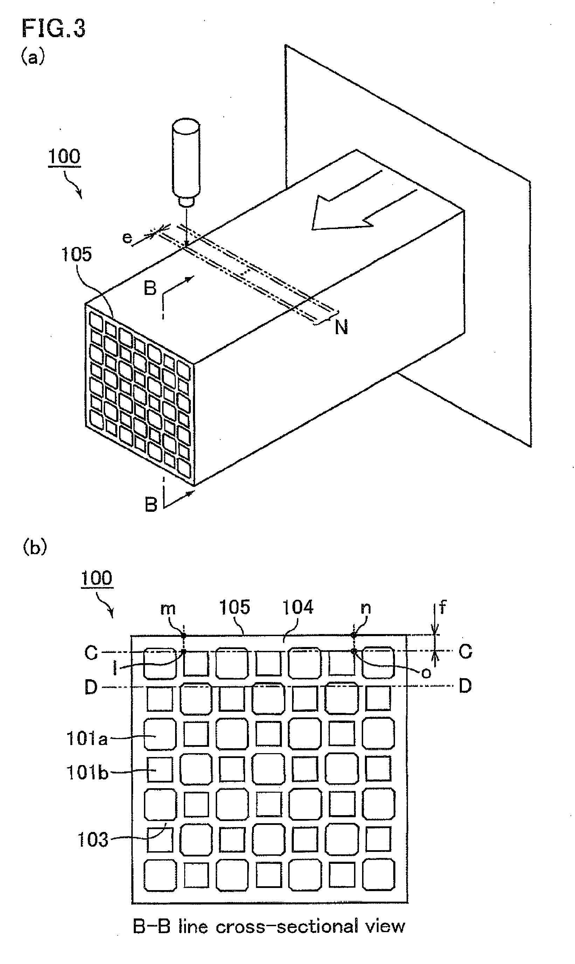

Fig. 3 (a) is a perspective view illustrating a detailed embodiment of the method for cutting a honeycomb molded body according to the first embodiment of the present invention. Fig. 3(b) is a B-B line cross-sectional view of the honeycomb molded body in Fig. 3(a).

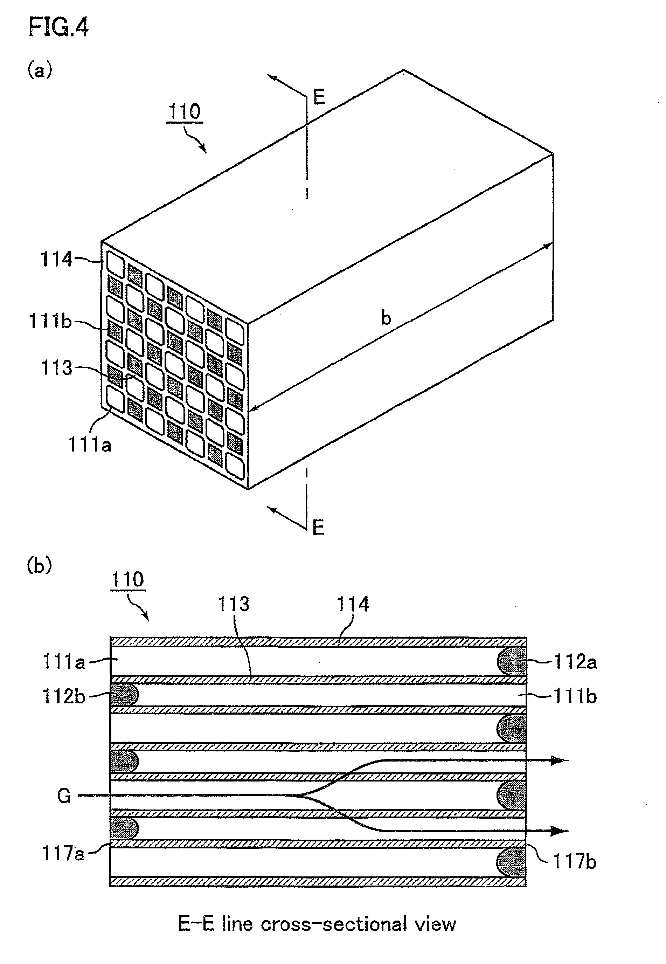

Fig. 4(a) is a schematic perspective view illustrating one example of a honeycomb fired body produced by the method for cutting a honeycomb molded body according to the first embodiment of the present invention. Fig. 4 (b) is an E-E line cross-sectional view of the honeycomb fired body in Fig. 4 (a).

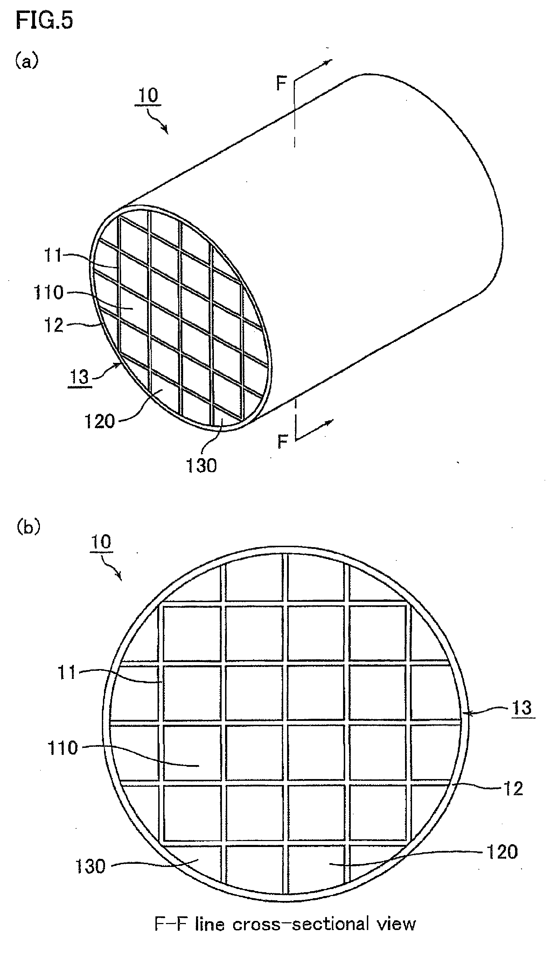

Fig. 5 (a) is a schematic perspective view illustrating one example of a honeycomb structured body including the honeycomb fired bodies manufactured by the method for cutting a honeycomb molded body according to the first embodiment of the present invention. Fig. 5 (b) is an F-F line cross-sectional view of the honeycomb structured body in Fig. 5(a).

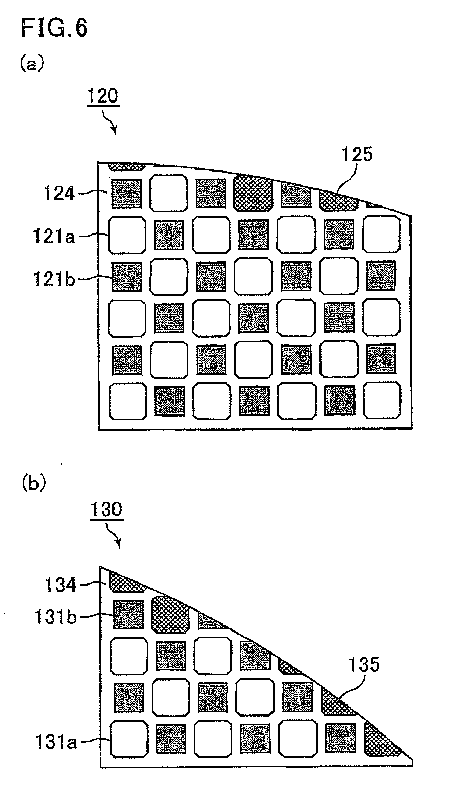

Fig. 6 (a) is a front view illustrating one example of the honeycomb fired body positioned at the outermost periphery of the honeycomb structured body including the honeycomb fired bodies manufactured by the method for cutting a honeycomb molded body according to the first embodiment of the present invention. Fig. 6 (b) is a front view illustrating another example of the honeycomb fired body positioned at the outermost periphery of the honeycomb structured body including the honeycomb fired bodies manufactured by the method for cutting a honeycomb molded body according to the first embodiment of the present invention.

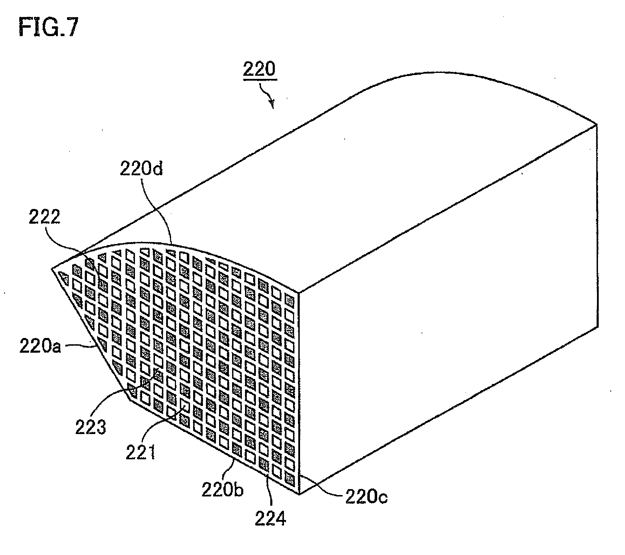

Fig. 7 is a schematic perspective view illustrating one example of an outer honeycomb fired body manufactured by the method for cutting a honeycomb molded body according to a second embodiment of the present invention.

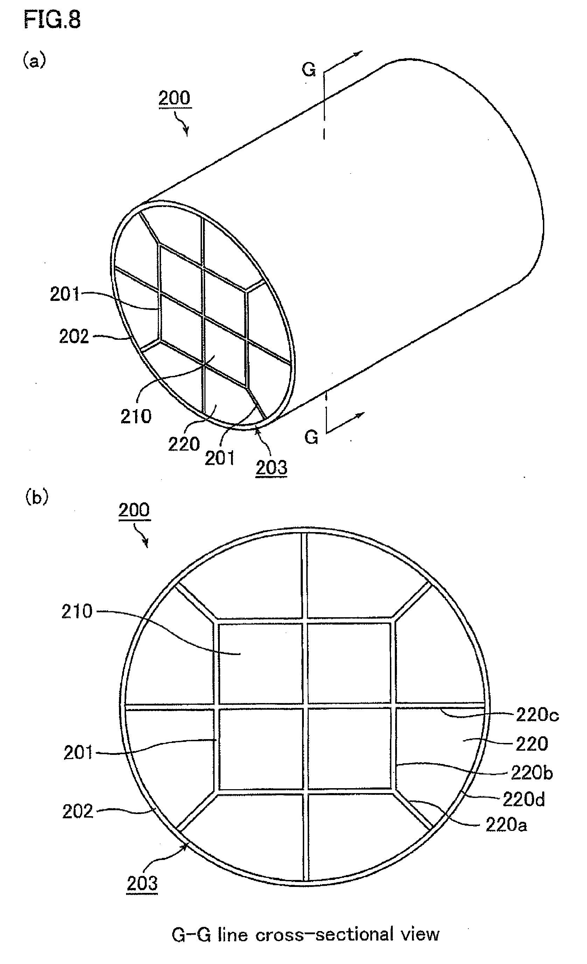

Fig. 8 (a) is a schematic perspective view illustrating one example of a honeycomb structured body including honeycomb fired bodies manufactured by the method for cutting a honeycomb molded body according to the second embodiment of the present invention. Fig. 8 (b) is a G-G line cross-sectional view of the honeycomb structured body in Fig. 8(a).

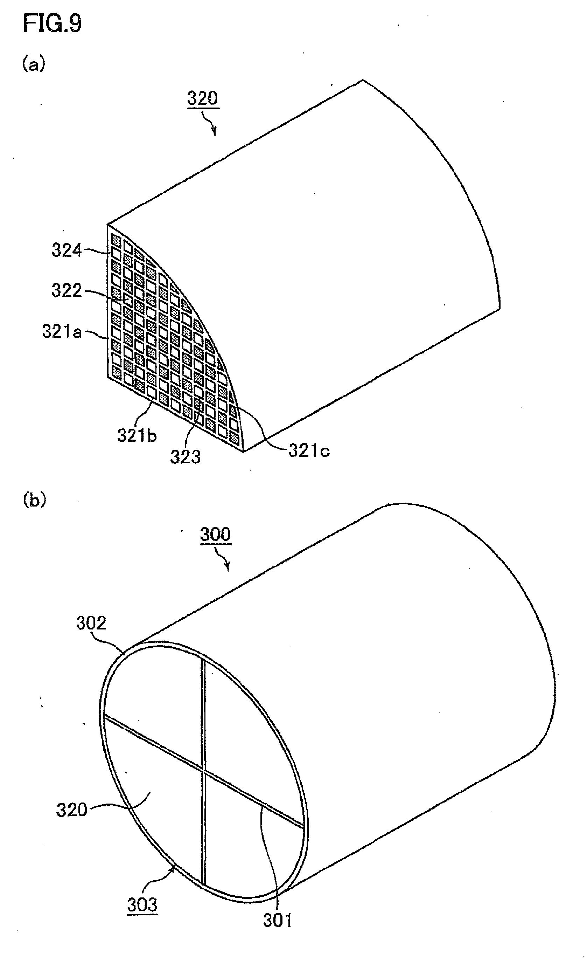

Fig. 9 (a) is a schematic perspective view illustrating a honeycomb fired body manufactured by a method for cutting a honeycomb molded body according to a third embodiment of the present invention. Fig. 9 (b) is a schematic perspective view illustrating a honeycomb structured body including the honeycomb fired body in Fig. 9(a).

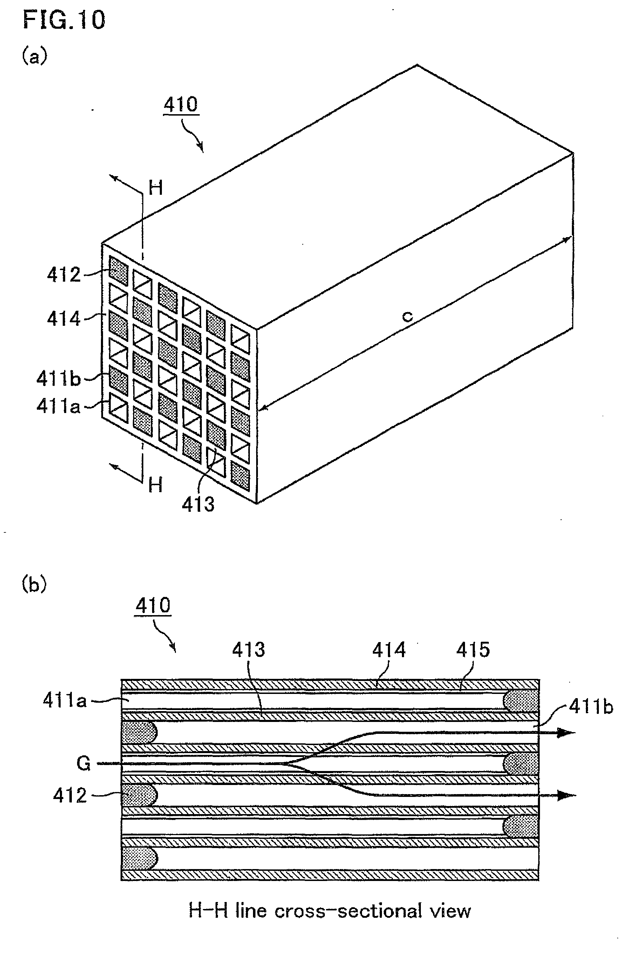

Fig. 10(a) is a schematic perspective view illustrating one example of a honeycomb fired body manufactured by a method for cutting a honeycomb molded body according to a fourth embodiment of the present invention. Fig. 10 (b) is an H-H line cross-sectional view of the honeycomb fired body in Fig. 10 (a).

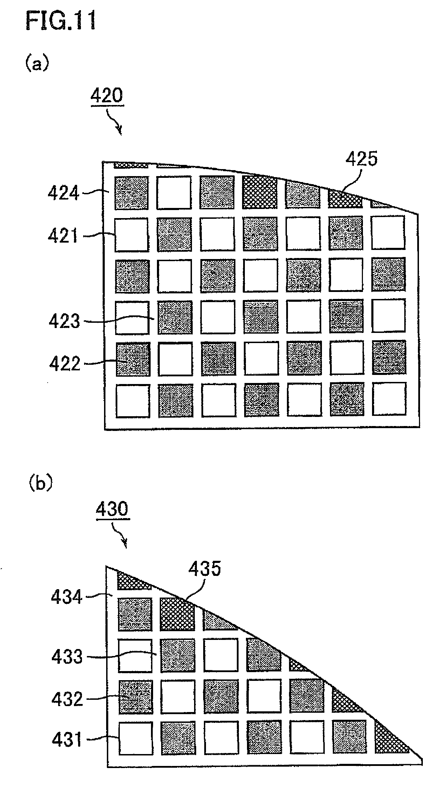

Fig. 11 (a) is a front view illustrating one example of a honeycomb fired body positioned at the outermost periphery of the honeycomb structured body including the honeycomb fired bodies manufactured by the method for cutting a honeycomb molded body of the fourth embodiment of the present invention. Fig. 11(b) is a front view illustrating another example of a honeycomb fired body positioned at the outermost periphery of the honeycomb structured body including the honeycomb fired bodies manufactured by the method for cutting a honeycomb molded body according to the fourth embodiment of the present invention.

MODES FOR CARRYING OUT THE INVENTION

Patent Document 1 disclosing a conventional method for cutting a honeycomb molded body does not specifically disclose the kind of the laser used for forming a cut guide groove. Cutting of a honeycomb molded body containing silicon carbide by $CO_2$ laser that is a most commonly used laser based on Patent Document 1 revealed a problem of lowering of the accuracy in formation of a directional groove for cut (also referred to as a cut guide groove).

The present inventors have considered the reason why the accuracy is lowered in formation of a cut guide groove in a honeycomb molded body.

Use of $CO_2$ laser that is commonly used may be considered in formation of a cut guide groove in the case of cutting a honeycomb molded body made of a material containing silicon carbide. The absorption band of silicon carbide is around 10.6 $\mu$m that is within the wavelength range of $CO_2$ laser. Therefore, it is possible to cut a honeycomb molded body with $CO_2$ laser. However, the present inventors have found out that the accuracy is problematically lowered in formation of a cut guide groove by application of $CO_2$ laser in a honeycomb molded body made of a material containing silicon carbide.

The presumable reason is as follows. Silicon carbide has high reflectance of light within a wavelength range of $CO_2$ laser, though it at the same time has high absorbance of light within that wavelength range. Then, the surface of silicon carbide crystals reflects $CO_2$ laser light and the available energy amount of laser is relatively decreased. The small energy amount of laser requires multiple laser irradiations on the same site to form a cut guide groove having a predetermined depth. Here, the more the number of laser irradiations increases, the more the irradiation site tends to be dislocated. Accordingly, use of $CO_2$ laser decreases the accuracy in formation of a cut guide groove in a honeycomb molded body made of a material containing silicon carbide.

On the other hand, silicon carbide has a small reflectance of laser light within a wavelength range of 0.7 to 2.5 $\mu$m (especially, fiber laser having a wavelength range of 1.06 $\mu$m), though it at the same time has a small absorbance of the laser light within that wavelength range. Then, the available energy amount of the laser light is presumably relatively increased. Accordingly, the present inventors found out that use of such laser light rather increases the accuracy in formation of a cut guide groove in a honeycomb molded body.

It is to be noted that the accuracy in formation of a cut guide groove in a honeycomb molded body herein refers to the variation in the central value of a formed cut guide groove compared to the designed central value of the cut guide groove.

If the accuracy in formation of a cut guide groove is low, a cut guide groove cannot be formed accurately at a predetermined position. In such a case, the width of the cut guide groove should be significantly large compared to the diameter of the wire used for cutting the honeycomb molded body so that the wire is surely positioned within the line that is to be the cut guide groove. Enlargement of the cut guide groove width extends the time for forming the cut guide groove. Additionally, in such a honeycomb molded body, the area useless as a honeycomb molded body increases. Accordingly, material costs are increased. Moreover, costs are increased also by prolonged processing time.

The spot size of fiber laser is smaller than that of $CO_2$ laser. This increases the number of laser irradiations required for formation of a cut guide groove having a predetermined width and a predetermined depth. However, a smaller spot size increases the focus depth of laser light. This reduces an influence by heat and the like during laser irradiation. Accordingly, it is possible to shorten the time for forming a cut guide groove.

As above, the present inventors found out an unpredictable effect. Namely, it is possible to enhance the cutting accuracy in cutting a honeycomb molded body made of a material containing silicon carbide by using a fiver laser that is commonly considered to be disadvantageous from the standpoint of costs and the cutting accuracy. In this manner, the present invention has been completed.

Namely, a method for cutting a honeycomb molded body being a pillar-shaped honeycomb molded body that is made of a material including silicon carbide, is manufactured by extrusion molding, and has a large number of cells placed in parallel with one another in a longitudinal direction with a cell wall interposed therebetween and a peripheral wall formed on each side face of the present invention comprises the steps of: forming a cut guide groove on the periphery of the honeycomb molded body by applying laser in a wavelength range of 0.7 to 2.5 $\mu$m; and cutting the honeycomb molded body to a predetermined length along the cut guide groove with a wire.

Hereinafter, embodiments of the present invention are specifically described. However, the present invention is not limited only to the following embodiments and the embodiments may be appropriately changed and applied to the present invention as long as the gist of the present invention are not changed.

(First Embodiment)

Now, a first embodiment is described which is one embodiment of the method for cutting a honeycomb molded body of the present invention.

First of all, a description is given on a method for cutting a honeycomb molded body and a method for manufacturing a honeycomb structured body utilizing the method for cutting a honeycomb molded body according to the first embodiment of the present invention.

(1) First, a honeycomb molded body is manufactured by extrusion-molding a wet mixture including ceramic powder containing silicon carbide and a binder.

Specifically, two kinds of silicon carbide powder different in the average particle size as ceramic powder, an organic binder, a liquid plasticizer, a lubricant, and water are mixed to provide a wet mixture for manufacturing a honeycomb molded body.

Next, the wet mixture is charged into an extrusion molding machine and extrusion-molded. Then, a honeycomb molded body having a large number of cells placed in parallel with one another in the longitudinal direction with a cell wall interposed therebetween and a peripheral wall formed on each side face are extruded from a die and formed into a longitudinally-continuous shape. Such a continuously-formed honeycomb molded body is cut to a predetermined length by the method for cutting a honeycomb molded body according to the present embodiment. The honeycomb molded body to be cut and the method for cutting it is specifically described later.

(2) Subsequently, the obtained honeycomb molded body is dried by using a drying apparatus, such as a microwave drying apparatus, a hot-air drying apparatus, a dielectric drying apparatus, a reduced-pressure drying apparatus, a vacuum drying apparatus and a freeze drying apparatus. Then, predetermined cells of this dried honeycomb molded body are filled with a plug material paste that is to be formed into plugs, to be sealed. Here, the wet mixture may be used as a plug material paste.

(3) Next, the honeycomb molded body having the predetermined cells sealed is heated in a degreasing furnace so that the organic substances therein are removed, and is then transferred to a firing furnace and fired to provide a honeycomb fired body.

The plug material paste in end portions of the cells is fired by heating to be formed into plugs.

Here, with respect to the conditions of the cutting, drying, sealing, degreasing and firing processes, those conditions conventionally used upon manufacturing a honeycomb fired body can be adopted.

Hereinafter, a detailed description is given on the honeycomb molded body to be cut in the method for cutting a honeycomb molded body according to the first embodiment of the present invention.

Fig. 1 (a) is a schematic perspective view illustrating one example of a honeycomb molded body to be cut in the method for cutting a honeycomb molded body of a first embodiment of the present invention. Fig. 1 (b) is an A-A line cross-sectional view illustrating the honeycomb molded body in Fig. 1(a).

In a honeycomb molded body 100 illustrated in Figs. 1 (a) and 1 (b) a large number of cells 101 are placed in parallel with one another in a longitudinal direction (direction of arrow "a" in Fig. 1 (a)) with a cell wall 103 interposed therebetween and a peripheral wall 104 is formed therearound.

In the honeycomb molded body 100, a large-volume cell 101a and a small-volume cell 101b are alternately positioned. The large-volume cell 101a has a comparatively large cross-sectional area in a direction vertical to the longitudinal direction compared to the small-volume cell 101b. The small-volume cell 101b has a comparatively small cross-sectional area in a direction vertical to the longitudinal direction compared to the large-volume cell 101a.

The large-volume cell 101a has an octagonal cross-sectional shape in a direction vertical to the longitudinal direction and the small-volume cell 101b has a quadrangle (square) cross-sectional shape in a direction vertical to the longitudinal direction.

The honeycomb molded body 100 is formed by extrusion-molding a wet mixture prepared by mixing two kinds of silicon carbide powder different in the average particle size as ceramic powder, an organic binder, a liquid plasticizer, a lubricant, and water, as mentioned above. The honeycomb molded body 100 contains water, as well as silicon carbide powder as a main component.

The particle size of the silicon carbide powder is not particularly limited, and the silicon carbide powder that tends not to cause the case where the size of the honeycomb fired body manufactured by the following firing treatment becomes smaller than that of the honeycomb molded body after degreased is preferable. For example, a preferable combination is 100 parts by weight of silicon carbide powder having the average particle size of 1. 0 to 50 $\mu$m and 5 to 65 parts by weight of silicon carbide powder having the average particle size of 0.1 to 1.0 $\mu$m. The pore size can be adjusted by the adjustment of the particle size of ceramic powder.

The organic binder is not particularly limited, and examples thereof include methylcellulose, carboxy methylcellulose, hydroxy ethylcellulose, and polyethylene glycol.

Methylcellulose is preferable among these. The amount of the organic binder is preferably 1 to 10 parts by weight for each 100 parts by weight of the ceramic powder.

The plasticizer is not particularly limited, and examples thereof include glycerin.

The lubricant is not particularly limited, and examples thereof include polyoxyalkylene compounds such as polyoxyehtylene alkylether and polyoxypropylene alkylether. Specific examples of the lubricant include polyoxyethylene monobutylether and polyoxypropylene monobutylether.

It is to be noted that plasticizers and lubricants may not be contained in the wet mixture in some cases.

In preparation of the wet mixture, water is used as a dispersion medium. The dispersion medium is not limited to water, and organic media such as benzene and alcohols such as methanol may be used. The dispersion medium is appropriately blended so that the wet mixture has viscosity in a predetermined range.

Moreover, the wet mixture may contain a pore forming agent such as balloons that are fine hollow spheres including oxide-based ceramics, spherical acrylic particles, and graphite, if necessary.

The balloon is not particularly limited, and examples thereof include alumina balloon, glass micro balloon, shirasu balloon, fly ash balloon (FA balloon), and mullite balloon. Alumina balloon is desirable among these.

The main component of the constitution material of the honeycomb molded body is not limited to silicon carbide, and may also be a combination of silicon carbide and metallic silicon. Such a honeycomb molded body is fired to be a honeycomb fired body made of silicon-bonded silicon carbide.

The honeycomb molded body 100 preferably has a cross-sectional shape including at least one linear section in a direction vertical to the longitudinal direction, and more preferably has a quadrangle shape as the honeycomb molded body according to the present embodiment. Namely, the formed honeycomb molded body 100 preferably has at least a flat part and more preferably has a square-pillar shape.

The cell wall 103 has a thickness of preferably 0.1 mm or more and less than 0.2 mm and more preferably 0.150 mm to 0.195 mm.

The peripheral wall 104 has a thickness of preferably 0.2 to 0.5 mm and more preferably 0.25 to 0.40 mm. Here, the thickness of the peripheral wall 104 refers to the distance between the inner face of the outermost small-volume cell 101b and the surface of the side face of the honeycomb molded body 100.

Now, a specific description is given on the method for cutting a honeycomb molded body.

Figs. 2 (a) and 2 (b) are schematic perspective views each illustrating a method for cutting a honeycomb molded body according to the first embodiment of the present invention. Fig. 2(a) illustrates a process of forming a groove. Fig. 2(b) illustrates a process of cutting with a wire.

Fig. 3 (a) is a perspective view illustrating a detailed embodiment of the method for cutting a honeycomb molded body according to the first embodiment of the present invention. Fig. 3 (b) is a B-B line cross-sectional view of the honeycomb molded body in Fig. 3(a).

(1) First, as illustrated in Fig. 2(a), a side face 100a of the honeycomb molded body is irradiated with laser as the irradiation site is shifted from one end to the other in a direction vertical to the longitudinal direction of the honeycomb molded body. In this manner, a cut guide groove 14 is formed. Subsequently, the extrusion-molded honeycomb molded body 100 is cut along the cut guide groove formed above with a wire, which will be described later, to a predetermined length. By repeating such a process, a large number of honeycomb molded bodies having a predetermined length are manufactured.

The laser preferably has a wavelength range of 0.7 to 2.5 $\mu$m and is more preferably fiber laser (wavelength of 1.06 $\mu$m).

Moreover, laser irradiation is carried out for a predetermined number of times ("N" in Fig. 3(a)) in single cutting process as the irradiation site is shifted by a predetermined distance ("e" in Fig. 3 (a)). For example, in the case that fiber laser is used, laser irradiation is carried out for 15 to 25 times as the irradiation site is shifted by 20 to 30 $\mu$m for each irradiation so that the cut guide groove 14 having a predetermined width (width in the longitudinal direction of the honeycomb molded body 100).

As mentioned above, the honeycomb molded body 100 has a cross-sectional shape including at least one linear section in a direction vertical to the longitudinal direction. According to the cutting method of the present invention, laser irradiation is preferably carried out from a direction of the side face including the linear section 105.

As illustrated in Fig. 3 (b), in the case that the honeycomb molded body has a linear section, the peripheral wall over the cells has a rectangular cross sectional shape (1-m-n-o) As the honeycomb molded body 100 has pentagonal cells and quadrangle cells in the cross section vertical to the longitudinal direction, the cut guide groove is formed to a depth of the C-C line where the peripheral wall is completely cut. In the present description, the cross section vertical to the longitudinal direction refers to the cross section vertical to cells, assuming that the direction parallel with cells is defined as the longitudinal direction. Accordingly, in formation of a cut guide groove by application of laser from the direction of the side face including the linear section, the cut guide groove having a depth corresponding to the thickness of the peripheral wall having a rectangular cross-sectional shape can be formed. Therefore, it is possible to cut a honeycomb molded body without causing deformation such as buckling in the honeycomb molded body.

If the honeycomb molded body does not have a linear section, the uncut portion of the peripheral wall includes a thick part and a thin part. In such a case, the pressure applied is different from one part to another in accordance with the thickness, resulting in easy appearance of deformation such as buckling. Here, formation of a cut guide groove by completely cutting the peripheral wall corresponds to formation of a cut guide groove only to a depth corresponding to the peripheral wall.

It is to be noted that the honeycomb molded body 100 is extruded at a constant speed in a direction indicated by an arrow and moving. Accordingly, the moving speed of the honeycomb molded body 100 should be taken into consideration and laser should be irradiated in parallel with the linear section 105 that is one side of the end face of the cut honeycomb molded body to form the cut guide groove 14. Namely, the spot irradiated with laser is shifted in the longitudinal direction so as to follow the movement of the honeycomb molded body 100 in the longitudinal direction, and is also shifted in a direction parallel with the linear section 105 to form the cut guide groove on the honeycomb molded body 100.

The irradiation speed of laser (cutting speed) is preferably 400 to 1000 mm/s.

When the irradiation speed of laser (cutting speed) is 400 to 1000 mm/s, a cut guide groove having a sufficient depth is formed on the peripheral wall. Therefore, in the subsequent cutting process, the wire does not cause any deformation such as buckling in the cell walls of the honeycomb molded body and can cut the honeycomb molded body in a short time because the to-be-cut portion hardly has a thick part.

If the irradiation speed of laser (cutting speed) is less than 400 mm/s, it takes too much time to form a cut guide groove, lowering the cutting efficiency. On the other hand, if the irradiation speed of laser (cutting speed) is more than 1000 mm/s, a cut guide groove formed on the peripheral wall does not have a sufficient depth. In such a case, a physical force is applied to a part of the remaining peripheral wall in the subsequent cutting process, easily causing deformation such as buckling in the honeycomb molded body.

Here, the fiber laser is one kind of solid-state lasers and refers to lasers utilizing optical fibers as media. A common fiber laser is added with rare-earth ions and the optical fiber itself constitutes a resonator of the laser. Examples of the rare-earth elements include Yb, Er, Yb: Er, Tm, Nd. Especially, Yb is preferably added.

The laser is preferably outputted at 27 to 30 W. When the laser is outputted at 27 to 30 W, a cut guide groove having a sufficient depth is formed on the peripheral wall. Therefore, in the subsequent cutting process, the wire does not cause any deformation such as buckling in the honeycomb molded body and can cut the honeycomb molded body in a short time because the to-be-cut portion hardly has a thick part.

According to the cutting method of the present invention, the cut guide groove is preferably formed only to a depth corresponding to the peripheral wall or to a depth corresponding to the peripheral wall and at least one cell wall.

Here, the cut guide groove formed only to a depth corresponding to the peripheral wall refers to the cut guide groove having a depth that is equal to the thickness of the peripheral wall 104. Namely, the cut guide groove is formed to a depth indicated by a C-C line in Fig. 3(b) . Further, the cut guide groove formed to a depth corresponding to the peripheral wall and at least one cell wall refers to the following state. When cells in contact with the peripheral wall on which the cut guide groove is formed are referred to as cells in the first column and cells adjacent to the cells in the first column via the cell wall are referred to as cells in the second column, the cut guide groove formed by laser application may be described to have a depth equal to or more than the distance from the surface of the peripheral wall on which the cut guide groove is formed to the inner face closest to the cells in the first column among the inner faces of a cell having a smallest cross section in the longitudinal direction in the cells in the second column. Namely, the cut guide groove is formed to a depth indicated by a D-D line in Fig. 3(b).

As mentioned above, the width of the cut guide groove ("d" in Fig. 2 (a)) is adjusted by a predetermined number of times ("N" in Fig. 3 (a)) of irradiations with laser as the irradiation site is shifted by a predetermined distance ("e" in Fig. 3 (a)). Here, the width of the cut guide groove is preferably 0.5 to 1.0 mm and more preferably 0.6 to 0.9 mm.

When the width of the cut guide groove (direction vertical to the longitudinal direction of the cells) is 0.5 to 1.0 mm, the honeycomb molded body is surely cut with a wire in the cut guide groove. In such a case, the width needed for cutting can be narrowed as far as possible.

> (2) After the formation of the cut guide groove with the laser, a wire 15 is applied to the cut guide groove 14 and the wire 15 is compressed to the honeycomb molded body 100. The wire 15 is moved downwardly in a direction vertical to the longitudinal direction of the honeycomb molded body 100 to cut the honeycomb molded body 100.

Here, the cut guide groove is formed by laser irradiations to a depth corresponding to the thickness of the peripheral wall or to a depth corresponding to the thickness of the peripheral wall and a part of the cell walls. Therefore, there is no part to be cut having a thickness thicker than the cell wall. Accordingly, even in the case where the cell wall is thin (e.g. 0.1 mm or thicker and thinner than 0.2 mm), the honeycomb molded body can be cut without having deformation such as buckling therein.

In the method for cutting a honeycomb molded body according to the first embodiment of the present invention, the diameter of the wire is preferably 0.05 to 0. 10 mm as the physical force applied to the peripheral wall and the cell wall is preferably as small as possible during the cutting with a wire.

The length of the diameter of the wire is preferably 5% to 20% of the length of the width of the cut guide groove. When the length of the diameter of the wire is 5% to 20% of the width of the cut guide groove, the physical force applied to the peripheral wall and the cell wall during the cutting with the wire is small. As a result, deformation such as buckling is less likely to appear in the honeycomb molded body.

In addition, the traveling speed of the cutting wire is preferably 38 to 82 mm/s. When the traveling speed of the cutting wire is 38 to 82 mm/s, the wire can cut the honeycomb molded body in a short time without causing deformation such as buckling in the cell walls of the honeycomb molded body.

When the traveling speed is slower than 38 mm/s, the cutting efficiency is lowered. On the other hand, when the traveling speed is faster than 82 mm/s, the physical force applied to the honeycomb molded body increases, leading to easy appearance of deformation such as buckling in the honeycomb molded body.

It is to be noted that as the honeycomb molded body 100 is moving in the longitudinal direction, the wire should be shifted in the longitudinal direction so as to follow the movement of the honeycomb molded body 100, and should be also shifted downwardly in a direction vertical to the longitudinal direction of the honeycomb molded body in the cutting process with a wire.

Examples of the wire include a metal wire, a resin wire, and a metal wire coated with a resin. From the standpoint of the durability, a metal wire is preferable. From the standpoint of the anti-stick quality, a resin wire is preferable. Accordingly, the wire is preferably a metal wire, such as SUS, coated with a resin. The resin coating the metal wire is not particularly limited, and examples thereof include nylon, polyester, polyvinyl alcohol, and polyacrylic resins.

Hereinafter, the honeycomb fired body produced by the method for cutting a honeycomb molded body according to the first embodiment of the present invention is described with reference to drawings.

Fig. 4(a) is a schematic perspective view illustrating one example of a honeycomb fired body produced by the method for cutting a honeycomb molded body according to the first embodiment of the present invention. Fig. 4 (b) is an E-E line cross-sectional view of the honeycomb fired body in Fig. 4 (a).

A honeycomb fired body 110 illustrated in Figs. 4 (a) and 4(b) has a large number of cells placed in parallel with one another in the longitudinal direction (direction of arrow "b" in Fig, 4(a)) with a cell wall interposed therebetween and a peripheral wall 114 formed on the periphery.

In the honeycomb fired body 110, a large-volume cell 111a and a small-volume cell 111b are alternately positioned. The large-volume cell 111a has a comparatively large cross-sectional area in a direction vertical to the longitudinal direction compared to the small-volume cell 111b. The small-volume cell 111b has a comparatively small cross-sectional area in a direction vertical to the longitudinal direction compared to the large-volume cell 111a.

The large-volume cell 111a has an octagonal cross-sectional shape in a direction vertical to the longitudinal direction and the small-volume cell 111b has a quadrangle (square) cross-sectional shape in a direction vertical to the longitudinal direction.

Here, the ratio of the cross-sectional area of the small-volume cell in a direction vertical to the longitudinal direction to the cross-sectional area of the large-volume cell in a direction vertical to the longitudinal direction (the cross sectional area of the large-volume cell / the cross-sectional area of the small-volume cell) is preferably 1.4 to 2.8 and more preferably 1.5 to 2.4.

When cells opening on the gas-inlet side are set as the large-volume cells and cells opening on the gas-outlet side are set as the small-volume cells, more PMs can be collected in the cells opening on the gas-inlet side (large-volume cells). However, if the area ratio is less than 1.4, the difference in the cross sectional area is small between the large-volume cell and the small-volume cell. In such a case, the effect provided by the large-volume cells and the small-volume cells, namely, collection of more PMs is not easily obtained. On the other hand, if the area ratio is more than 2.8, the cross-sectional area of the small-volume cell in a direction vertical to the longitudinal direction is too small. In such a case, the pressure loss due to the friction between exhaust gases and the cells opening on the gas-outlet side (small-volume cell) increases.

In the honeycomb fired body 110 illustrated in Figs. 4 (a) and 4 (b), the large-volume cell 111a has an opening end on the side of a first end face 117a of the honeycomb fired body 110 and a sealed end on the side of a second end face 117b of the honeycomb fired body 110. On the other hand, the small-volume cell 111b has an opening end on the side of the second end face 117b and a sealed end sealed by a sealing material 112b on the side of the first end face 117a.

Accordingly, as illustrated in Fig. 4(b), exhaust gases G (exhaust gases are indicated by "G" and flow thereof is indicated by arrows in Fig. 4 (b)) flowing into the large-volume cells 111a are to be discharged from the small-volume cells 111b after surely passing through cell walls 113 separating the large-volume cells 111a and the small-volume cells 111b. Here, PM and the like in the exhaust gases G are collected while the exhaust gases G are passing through the cell walls 113 and the cell walls 113 separating the large-volume cells 111a and the small-volume cells 111b function as filters.

As mentioned above, gases such as exhaust gases can pass through the large-volume cells 111a and the small-volume cells 111b of the honeycomb fired body 110. In the case where gases such as exhaust gases flow in the direction shown in Fig. 4 (b), the end portion on the side of the first end face 117a of the honeycomb fired body 110 (the end portion on the sealed side of the small-volume cell 111b) is referred to as an end portion on the gas-inlet side and the end portion on the side of the second end face 117b of the honeycomb fired body 110 (the end portion on the sealed side of the large-volume cell 111a) is referred to as an end portion on the gas-outlet side.

Namely, the large volume cells 111a with an opening end on the gas-inlet side are cells 111a on the gas-inlet side and the small-volume cells 111b with an opening end on the gas-outlet side are cells 111b on the gas-outlet side.

The cross-sectional shape of the honeycomb fired body in a direction vertical to the longitudinal direction preferably includes at least one linear section, and is more preferably quadrangle (square) like the honeycomb fired body according to the present embodiment.

The cell wall 113 preferably has a thickness of 0.1 mm or more and less than 0.2 mm and the peripheral wall 114 has a thickness of 0.2 to 0.5 mm like the honeycomb molded body illustrated in Figs. 1(a) and 1(b).

Next, a description is given on a method for manufacturing a honeycomb structured body including the honeycomb fired body manufactured by the above method.

(1) An adhesive paste is applied to a predetermined side face of each honeycomb fired body to form an adhesive paste layer. In the honeycomb fired body, a predetermined end portion of each cell is sealed. The adhesive paste layer is heated and solidified so as to be formed into an adhesive layer. In this manner, a plurality of honeycomb fired bodies are bonded via an adhesive layer so that a honeycomb block is manufactured.

Here, the adhesive paste contains, for example, an inorganic binder and inorganic particles. The adhesive paste may further contain an organic binder. Moreover, the adhesive paste further contains an inorganic fiber and/or whisker.

(2) Then, the periphery processing in which the honeycomb block is trimmed is conducted.

Specifically, the periphery of the honeycomb block is trimmed using a diamond cutter so that a honeycomb block with a round pillar-shaped periphery is manufactured.

(3) Next, a periphery coating material paste is applied to the peripheral face of the round pillar-shaped honeycomb block. The periphery coating material paste is heated and solidified to be formed into a peripheral coat layer.

Here, the above adhesive paste may be used as the periphery coating material paste. Alternatively, a paste having a composition different from that of the adhesive paste may also be used as the periphery coating material paste.

It is to be noted that the peripheral coat layer is not an essential component and may be formed if necessary.

Accordingly, the honeycomb structured body according to the first embodiment of the present invention is manufactured.

Hereinafter, the honeycomb structured body according to the first embodiment of the present invention is described with reference to drawings. The honeycomb structured body is manufactured using honeycomb fired bodies obtained by the method for cutting a honeycomb molded body according to the first embodiment of the present invention. Fig. 5(a) is a schematic perspective view illustrating one example of a honeycomb structured body including the honeycomb fired bodies manufactured by the method for cutting a honeycomb molded body according to the first embodiment of the present invention. Fig. 5 (b) is an F-F line cross-sectional view of the honeycomb structured body in Fig. 5(a).

Fig. 6 (a) is a front view illustrating one example of the honeycomb fired body positioned at the outermost periphery of the honeycomb structured body including the honeycomb fired bodies manufactured by the method for cutting a honeycomb molded body according to the first embodiment of the present invention. Fig. 6(b) is a front view illustrating another example of the honeycomb fired body positioned at the outermost periphery of the honeycomb structured body including the honeycomb fired bodies manufactured by the method for cutting a honeycomb molded body according to the first embodiment of the present invention.

In Figs. 6 (a) and 6 (b), though the peripheral coat layer is omitted, solidified substances (125 and 135) of the periphery coating material paste filled into cells are illustrated.

In the honeycomb structured body 10 illustrated in Figs. 5 (a) and 5 (b), a plurality of honeycomb fired bodies 110, 120, and 130 are bonded via the adhesive layer 11 to constitute a honeycomb block 13. A peripheral coat layer 12 is formed on the periphery of the honeycomb block. Here, the peripheral coating layer may be formed if necessary.

In the honeycomb structured body 10 illustrated in Figs. 5 (a) and 5 (b), 36 pieces of the honeycomb fired bodies 110 illustrated in Figs. 4 (a) and 4 (b) are bonded via the adhesive layer 11 to form a square pillar-shaped honeycomb block. The periphery thereof is processed using a diamond cutter or the like and a periphery coat layer is formed on the processed periphery. The resulting honeycomb block 13 (honeycomb structured body 10) is constituted by eight pieces of outer honeycomb fired bodies 120 and eight pieces of outer honeycomb fired bodies 130 which form the periphery of the honeycomb block 13 and 16 pieces of inner honeycomb fired bodies 110 positioned underneath the honeycomb fired bodies 120 and 130. The cross section thereof has a circular shape.

As illustrated in Fig. 5(b), the inner honeycomb fired body 110 has a quadrangle (square) cross-sectional shape.

Further, as illustrated in Figs. 5 (b) and 6 (a), the outer honeycomb fired body 120 has a cross-sectional shape surrounded by three line segments and one arc.

Moreover, as illustrated in Figs. 5 (b) and 6 (b), the outer honeycomb fired body 130 has a cross-sectional shape surrounded by two line segments and one arc.

In the honeycomb structured body 10 constituted as mentioned above, the honeycomb fired bodies 110, 120, and 130 function as filters. Therefore, the honeycomb structured body 10 is favorably used as a filter for purifying exhaust gases which removes particulates in exhaust gases discharged from internal combustion engines such as diesel engines.

Honeycomb fired bodies having a quadrangle cross-sectional shape as inner honeycomb fired bodies and honeycomb fired bodies having predetermined shapes (in the case of Figs. 5(a) and 5(b), the cross-sectional shape surrounded by three line segments and one arc and the cross-sectional shape surrounded by two line segments and one arc) and including peripheral walls may be bonded via an adhesive layer to formed into a predetermined shape (e.g. circular cross section). In such a case, peripheral processing may be omitted.

Hereinafter, the effects of the method for cutting a honeycomb molded body according to the first embodiment of the present invention are listed.

(1) The method for cutting a honeycomb molded body according to the present embodiment includes formation of a cut guide groove by application of laser in a wavelength range of 0.7 to 2.5 $\mu$m on the periphery of the honeycomb molded body. Therefore, a cut guide groove can be formed without application of physical force to the peripheral wall of the honeycomb molded body. As a result, it is possible to form a cut guide groove without causing deformation such as buckling in the peripheral wall of the honeycomb molded body and the cell walls in the honeycomb molded body.

Once a cut guide groove is formed on the peripheral wall of the honeycomb molded body, the portion to be cut does not have a part thicker than the cell wall. Accordingly, it is possible to cut the honeycomb molded body without causing deformation such as buckling by a wire in the honeycomb molded body.

(2) The laser in a wavelength range of 0.7 to 2.5 $\mu$m has a small reflectance, though the absorbance of silicon carbide is also small. Then, the energy amount of usable laser light is relatively increased, enhancing the formation accuracy of the cut guide groove on the honeycomb molded body. In addition, the laser in a wavelength range of 0.7 to 2.5 $\mu$m has a smaller spot size compared to $CO_2$ laser. This increases the number of laser irradiations required to form a cut guide groove having a predetermined width and a predetermined depth. However, the smaller spot size increases the focus depth of the laser light, reducing the influence by heat and the like during the laser irradiation. Consequently, it is possible to shorten the time to form a cut guide groove.

(3) In the method for cutting a honeycomb molded body according to the present embodiment, a cut guide groove is formed only to a depth corresponding to the peripheral wall or to a depth corresponding to the peripheral wall and at least one cell wall. Therefore, in the subsequent cutting process, the portion to be cut does not have a part thicker than the cell wall or the peripheral wall is already completely cut. In such a case, it is possible to cut the honeycomb molded body in a short time without causing deformation such as buckling in the cell walls of the honeycomb molded body with a wire. Moreover, in the case where the cut guide groove is formed to a depth corresponding to the peripheral wall and at least one cell wall, the minor adjustment of the cutting site is not needed.

(4) In the method for cutting a honeycomb molded body according to the present embodiment, the width of the cut guide groove is 0.5 to 1.0 mm. Accordingly, the honeycomb molded body is surely cut with a wire in the cut guide groove. In such a case, the width needed for cutting can be narrowed as far as possible.

EXAMPLES

(Examples)

Hereinafter, examples more specifically disclose the first embodiment of the present invention. However, the present invention is not limited only to these examples.

(Example 1)

(i) Manufacturing of honeycomb fired body

First, 54.6 wt% of silicon carbide coarse powder having the average particle size of 22 $\mu$m and 23.4 wt% of silicon carbide fine powder having the average particle size of 0.5 $\mu$m were mixed. To the mixture, 4.3 wt% of an organic binder (methylcellulose), 2.6 wt% of a lubricant (product of NOF Corporation, UNILUB), 1. 2 wt% of glycerin, and 13. 9 wt% of water were added and kneaded to provide a wet mixture.

Next, the obtained wet mixture was charged into an extrusion molding machine and extrusion-molded from the machine at the extrusion rate of 3.3 m/min. The obtained continuous ceramic molded body was cut by application of laser and a wire.

Fiber laser (spot size of 50 $\mu$m) in a wavelength range of 0.7 to 2.5 $\mu$m was used as laser for forming a cut guide groove. A cut guide groove is formed on the continuous ceramic molded body such that it has a width (width indicated by "d" in Fig. 2 (a)) of 0.65 mm in the longitudinal direction and a depth of 0.32 mm in a direction vertical to the longitudinal direction of the continuous ceramic molded body. The time from the start to the completion of formation of the cut guide groove (cutting treatment time) was measured. The cutting treatment time was 2.9 seconds.

Next, a wire having a diameter of 0.06 mm was set to be positioned in the cut guide groove and cutting with a wire was carried out. In the wire, seven element wires made of SUS313 and having a diameter of 0.03 mm were S-twisted and the periphery thereof is covered with a nylon resin.

In this manner, a raw honeycomb molded body was manufactured which has a substantially similar shape as the honeycomb fired body illustrated in Fig. 4 (a) and has unsealed cells. In the obtained honeycomb molded body, a cell wall had a thickness of 0.18 mm and a peripheral wall had a thickness of 0.32 mm.

Subsequently, the raw honeycomb molded body was dried using a micro wave drying apparatus. Then, predetermined cells of the dried honeycomb molded body were filled with a sealing material paste to be sealed. Here, the wet mixture was used as the sealing material paste. After the sealing of cells, the honeycomb molded body filled with the sealing material paste was dried again using a drying apparatus.

Then, the resulting honeycomb molded body was degreased at 400°C and fired under argon atmosphere at 2200°C for three hours.

In this manner, a honeycomb fired body was manufactured.

The obtained honeycomb fired body was made of a porous silicon carbide sintered body and had large volume cells having an octagonal cross-sectional shape and small-volume cells having a quadrangle cross-sectional shape as illustrated in Figs. 4 (a) and 4 (b). The honeycomb fired body had the average pore size of 9 $\mu$m and the size of 34.3 mm $\times$ 34.3 mm x 200 mm. In a single honeycomb fired body, 529 cells in total (23 cells in height $\times$ 23 cells in width) were formed. As with the honeycomb molded body, the cell wall had a thickness of 0.18 mm and the peripheral wall had a thickness of 0.32 mm.

(Example 2)

A honeycomb fired body was manufactured in the same manner as in Example 1, except that the depth of the cut guide groove in Example 2 was set to a depth (1.61 mm) corresponding to the thickness of the peripheral wall (0.32 mm) and a single cell wall. In forming the cut guide groove, the upper cell walls of cells having an octagonal cross-sectional shape and of cells having an quadrangle cross-sectional shape were all cut and a partially-uncut portion was not left.

(Comparative Example 1)

A honeycomb fired body was manufactured in the same manner as in Example 1, except that $CO_2$ laser (spot size of 150 $\mu$ m) was used as the laser for forming a cut guide groove.

(Comparative Example 2)

A honeycomb fired body was manufactured in the same manner as in Example 1, except that fiber laser (spot size of 50 $\mu$m) was used as the laser for forming a cut guide groove and the depth of the cut guide groove was set to 0.16 mm.

(Evaluation)

The following evaluations were conducted in Examples 1 to 2 and Comparative Examples 1 to 2.

(1) Cutting treatment time

The time needed for forming a cut guide groove having a predetermined width was measured with respect to honeycomb molded bodies of Examples 1 to 2 and Comparative Examples 1 to 2. Table 1 shows the results.

(2) Variation in width of cut guide groove

After formation of a cut guide groove in the continuous ceramic molded bodies extrusion-molded in each of Examples 1 to 2 and Comparative Examples 1 to 2, the width of the cut guide groove was measured and the variation from the designed width was evaluated. The variation was indicated by an absolute value of the difference between the width ($d_n$) of the formed cut guide groove and the designed width ($d_o$) of the cut guide groove.

$$\text{Variation in width (mm)} = |\ d_n - d_o\ |$$

Here, the designed width ($d_o$) of the cut guide groove in the present invention is 0.65 mm.

In Example 1, for example, the width ($d_n$) of the formed cut guide groove was 0.79 mm. The variation of the width was calculated using the above formula:

$$| d_n - d_o | = 0.79 - 0.65 = 0.14 \ (mm).$$

Table 1 shows the variations in width similarly obtained with regard to Example 2 and Comparative Examples 1 to 2.

(3) Evaluation of presence of buckling in honeycomb molded body

After cutting of the continuous honeycomb molded bodies, the cell shapes on the end faces and side faces were visually observed with regard to the honeycomb molded bodies obtained in Examples 1 to 2 and Comparative Examples 1 to 2. If deformation (buckling) appears in cells, buckling is considered to be "present" in such a honeycomb molded body. Table 1 shows the results.

[Table 1]

| | Kind of laser | Cut guide groove | | Cutting treatment time (seconds) | Variation in width of out guide groove | Presence of buckling |
|---|---|---|---|---|---|---|
| | | Formation state | depth (mm) | | | |
| Example 1 | Fiber laser | equal to thickness of peripheral wall | 0.32 | 2.9 | 0.14 | None |
| Example 2 | Fiber laser | equal to thickness of peripheral wall + single cell | 1.61 | 4.5 | 0.14 | None |
| Comparative Example 1 | $CO_2$ laser | equal to thickness of peripheral wall | 0.32 | 2.1 | 0.51 | None |
| Comparative Example 2 | Fiber laser | equal to 50% of the thickness of peripheral wall | 0.16 | 1.5 | 0.14 | Present |

As shown in Table 1, the cutting treatment time became longer along with deepening of the cut guide groove (2.9 seconds in Example 1, 4.5 seconds in Example 2). On the other hand, the cutting treatment time was 2.1 seconds in Comparative Example 1 in which cutting was conducted under the same conditions as in Example 1. As seen in comparison between Example 1 and Comparative Example 1, the honeycomb molded body was cut with $CO_2$ laser more quickly.

With regard to the variation in the width of the cut guide groove, the variation from the designed width of 0.65 mm was 0.14 mm in both of Examples 1 and 2 and was 0.51 mm in Comparative Example 1. The variation relative to the designed width was 0.14/0.65 = 21.5% in Examples 1 to 2 and 0.51/0.65 = 78.5% in Comparative Example 1. As clearly seen from this, the variation in comparative Example 1 was significantly high, which clarified use of $CO_2$ laser increases the variation in width of the formed cut guide groove.

Buckling appeared in Comparative Example 2, though no buckling appeared in Examples 1 to 2 and Comparative Example 1. Namely, if the peripheral wall includes a part where the cut guide groove is not formed (uncut portion), such as the case of the cut guide groove having a depth corresponding to 50% of the thickness of the peripheral wall, heat by laser irradiation cures the surface of the uncut portion. Then, the pressure is applied to the groove in cutting with a wire, leading to easy appearance of buckling in cells.

(ii) Manufacturing of honeycomb structured body

A honeycomb structured body was manufactured using the honeycomb fired bodies obtained in Examples 1.
An adhesive paste was applied to predetermined side faces of the honeycomb fired bodies. A number of 36 pieces (six pieces in height × six pieces in width) of the honeycomb fired bodies were bonded to one another via the adhesive paste to provide an aggregated body of the honeycomb fired bodies.
The adhesive paste in the aggregated body of the honeycomb fired bodies was dried at 180 °C for 20 minutes to be solidified. In this manner, a rectangular pillar-shaped ceramic block with an adhesive layer having a thickness of 1 mm was manufactured.
Here, the adhesive paste contains 30.0 wt% of silicon carbide having the average particle size of 0.6 $\mu$m, 21.4

wt% of silica sol (solid content of 30 wt%), 8.0 wt% of carboxy methylcellulose, and 40.6 wt% of water.

Then, the periphery of the rectangular pillar-shaped ceramic block was trimmed using a diamond cutter to provide a round pillar-shape ceramic block having a diameter of 198 mm.

Next, a periphery coating material paste was applied to the peripheral portion of the round pillar-shaped ceramic block. The periphery coating material paste was heated at 120 °C to be solidified. In this manner, a peripheral coat layer having a thickness of 1.0 mm was formed on the peripheral portion of the ceramic block. Here, the adhesive paste was used as the periphery coating material paste.

In this manner, a round pillar-shaped honeycomb structured body having a size of 200 mm in diameter × 200 mm in length was manufactured.

The obtained honeycomb structured body was used as a filter in an exhaust gas purifying apparatus and its performance. of PM collection was checked. Then, it was clarified that the honeycomb structured body had a sufficient capacity of PM collection.

(Second Embodiment)

Hereinafter, a second embodiment that is one embodiment of the present invention is described.

In the second embodiment of the present invention, a honeycomb molded body is cut by a method for cutting a honeycomb molded body similar to the method in the first embodiment of the present invention. The honeycomb molded body to be cut has an external shape partially different from that of the honeycomb molded body of the first embodiment of the present invention. Accordingly, a description is given on a method for cutting a honeycomb molded body according to the second embodiment of the present invention including a method for cutting a honeycomb molded body having an external shape different from that of the honeycomb molded body of the first embodiment of the present invention, a honeycomb molded body obtained by the method for cutting a honeycomb molded body, a honeycomb fired body obtained by firing the honeycomb molded body, and a honeycomb structured body constituted by the honeycomb fired body.

An inner honeycomb fired body according to the second embodiment of the present invention has the same external shape as the honeycomb fired body according to the first embodiment of the present invention.

In the second embodiment of the present invention, the external shape of an outer honeycomb fired body differs in that the cross-sectional shape in a vertical direction of the longitudinal direction is a shape surrounded by three line segments and one arc, compared to that of the first embodiment of the present invention.

Since the inner honeycomb fired body according to the second embodiment of the present invention has the same external shape as the honeycomb fired body according to the first embodiment of the present invention illustrated in Figs. 4 (a) and 4 (b), detailed description thereof is omitted here.

Fig. 7 is a schematic perspective view illustrating one example of an outer honeycomb fired body manufactured by the method for cutting a honeycomb molded body according to a second embodiment of the present invention.

Fig. 8 (a) is a schematic perspective view illustrating one example of a honeycomb structured body including honeycomb fired bodies manufactured by the method for cutting a honeycomb molded body according to the second embodiment of the present invention. Fig. 8 (b) is a G-G line cross-sectional view of the honeycomb structured body in Fig. 8(a).

Hereinafter, the outer honeycomb fired body according to the second embodiment of the present invention is described with reference to drawings.

The cross section of an outer honeycomb fired body 220 illustrated in Figs. 7 and 8(b) has an outline surrounded by three line segments 220a, 220b, and 220c and one arc 220d. Two angles formed by two line segments among the above three line segments (the angle formed by the line segments 220b and 220c and the angle formed by the line segments 220a and 220b) are 90° and 135°.

The outer honeycomb fired body 220 having such a shape is obtainable by degreasing and firing a honeycomb molded body having the same shape as the honeycomb fired body 220 illustrated in Figs. 7 and 8 (b) cut by the method for cutting a honeycomb molded body according to the second embodiment.

Now, description is given on a method for manufacturing the outer honeycomb fired body according to the second embodiment of the present invention.

In the method for manufacturing the outer honeycomb fired body according to the present embodiment, the method for cutting a honeycomb molded body includes the processes of: extrusion-molding a honeycomb molded body using a die in a shape different from the die according to the first embodiment of the present invention; irradiating the honeycomb molded body with laser from a direction of a side face including a linear section (220a, 220b, or 220c in Fig. 8(b)) among the cross-sectional shape in a direction vertical to the longitudinal direction to form a cut guide groove; and cutting the honeycomb molded body with a wire.

Other processes are similar to those of the method for manufacturing a honeycomb fired body according to the first embodiment of the present invention, and therefore, the detailed description is omitted here.

Now, a description is given on the method for manufacturing a honeycomb structured body constituted by the honeycomb fired bodies according to the second embodiment of the present invention.

In the method for manufacturing a honeycomb fired body according to the present embodiment, an adhesive paste is applied to side faces of an inner honeycomb fired body 210 and the outer honeycomb fired body 220 to form an adhesive layer. Then, a honeycomb block 203 in which a plurality of honeycomb fired bodies are bonded via adhesive paste layers is manufactured.

Other processes are similar to those of the method for manufacturing a honeycomb structured body constituted by the honeycomb fired bodies according to the first embodiment of the present invention, and therefore, the detailed description is omitted here.

Now, the honeycomb structured body constituted by the honeycomb fired bodies according to the second embodiment of the present invention is described with reference to drawings.

In the honeycomb structured body illustrated in Figs. 8 (a) and 8 (b), a plurality of inner honeycomb fired bodies 210 and outer honeycomb fired bodies 220 are bonded via an adhesive layer 201 to constitute the honeycomb block 203. A peripheral coat layer 202 is formed on the periphery of the honeycomb block 203. Here, the peripheral coating layer may be formed if necessary.

In a honeycomb structured body 200, as illustrated in Figs. 8 (a) and 8 (b), eight outer honeycomb fired bodies 220 form the periphery of the honeycomb block, four inner honeycomb fired bodies 210 are positioned underneath the outer honeycomb fired bodies 220, and a total of 12 honeycomb fired bodies are bonded via the adhesive layer 201 such that the cross section of the honeycomb structured body 200 (honeycomb block 203) has a circular shape.

In the present embodiment, the following effects are exerted in addition to the effects (1) to (4) mentioned in the first embodiment of the present invention.

(5) In the method for cutting a honeycomb molded body according to the present embodiment, the cross-sectional shape of the honeycomb molded body in a direction vertical to the longitudinal direction is a shape including at least one linear section. It is possible to prevent deformation in the honeycomb molded body by cutting the honeycomb molded body from a direction of the side face including the linear section.

(6) In the honeycomb structured body manufactured by the method for cutting a honeycomb molded body according to the present embodiment, every honeycomb fired body has a peripheral wall on the entire side faces. Therefore, it is possible to manufacture the honeycomb structured body without forming a peripheral coat layer. Accordingly, the honeycomb structured body is obtainable in simpler processes.

(Third Embodiment)

Hereinafter, a description is given on a third embodiment that is one embodiment of the present invention. The present embodiment is different from the first embodiment in that the outline of the cross section of the honeycomb fired body in a direction vertical to the longitudinal direction is a sector with the central angle of 90° whereas the external shape of the cross section in the first embodiment is a quadrangle (square).

In the following, a honeycomb fired body according to the third embodiment of the present invention and a honeycomb structured body constituted by the honeycomb fired body are described with reference to drawings.

Fig. 9(a) is a schematic perspective view illustrating a honeycomb fired body manufactured by a method for cutting a honeycomb molded body according to a third embodiment of the present invention. Fig. 9 (b) is a schematic perspective view illustrating a honeycomb structured body including the honeycomb fired body in Fig. 9(a).

The external shape of the cross section of a honeycomb fired body 320 illustrated in Fig. 9(a) is a sector with the central angle of 90° surrounded by two line segments 321a and 321b and one arc 321c.

In a honeycomb structured body 300 illustrated in Fig. 9 (b), four honeycomb fired bodies 320 are bonded via an adhesive layer 301 to form a honeycomb block 303 and a coat layer 302 is formed on the periphery of the honeycomb block 303.

Now, a description is given on the method for manufacturing a honeycomb fired body according to the third embodiment of the present invention.

In the method for manufacturing the outer honeycomb fired body according to the present embodiment, the method for cutting a honeycomb molded body includes the processes of: extrusion-molding a honeycomb molded body using a die in a shape different from the die according to the first embodiment of the present invention; irradiating the honeycomb molded body with laser from a direction of a side face including a linear section (321a or 321b in Fig. 9 (a)) among the cross-sectional shape in a direction vertical to the longitudinal direction to form a cut guide groove; and cutting the honeycomb molded body with a wire. It is possible to prevent deformation in the honeycomb molded body by cutting the honeycomb molded body from the direction of a side face including a linear section.

Other processes are similar to those of the method for manufacturing a honeycomb fired body according to the second embodiment of the present invention, and therefore, the detailed description thereof is omitted here.

Also in the present embodiment, the effects (1) to (6) mentioned in the second embodiment of the present invention are exerted.

(Fourth Embodiment)

Now, a description is given on a fourth embodiment that is one embodiment of the present invention. In the first embodiment of the present invention, a large number of cells include large-volume cells and small-volume cells in a cross section of the honeycomb fired body in a direction vertical to the longitudinal direction. The cross-sectional area of the large-volume cell in a direction vertical to the longitudinal direction is larger than that of the small-volume cell. On the other hand, in the fourth embodiment of the present invention, the shape and the cross-sectional area of a large number of cells in the honeycomb fired body are all identical to one another.

Hereinafter, a honeycomb fired body manufactured by the method for cutting a honeycomb molded body according to the fourth embodiment of the present invention is described with reference to drawings.

Fig. 10(a) is a schematic perspective view illustrating one example of a honeycomb fired body manufactured by a method for cutting a honeycomb molded body according to a fourth embodiment of the present invention. Fig. 10 (b) is an H-H line cross-sectional view of the honeycomb fired body in Fig. 10 (a) .

In a honeycomb fired body 410 illustrated in Figs. 10 (a) and 10 (b), a large number of cells 411 are placed in parallel with one another in the longitudinal direction (direction of arrow "c" in Fig. 10(a)) with a cell wall 413 interposed therebetween and a peripheral wall 414 is formed around the periphery thereof.

In the honeycomb fired body 410, either end portions of the cells 411 are sealed with sealing materials 412.

Accordingly, exhaust gases G (exhaust gases are indicated by "G" and flow thereof is indicated by arrows in Fig. 10(b)) flowing into a cell 411 with an opening on one end portion are to be discharged from another cell 411 having an opening on the other end portion after surely passing through the cell wall 413 separating the cells 411. Therefore, PM and the like in the exhaust gases G are collected while the exhaust gases G are passing through the cell wall 413. Consequently, the cell wall 413 functions as a filter.

The method for manufacturing a honeycomb fired body and a method for manufacturing a honeycomb structured body according to the fourth embodiment of the present invention are similar to those in the first embodiment of the present invention, and therefore, the detailed description thereof is omitted here.

Now, a description is given on a honeycomb structured body constituted by the honeycomb fired bodies according to the fourth embodiment of the present invention.

In the honeycomb structured body according to the present embodiment, a plurality of honeycomb fired bodies 410, 420, and 430 are bonded via an adhesive layer to form a honeycomb block and a peripheral coat layer is formed on the periphery of the honeycomb block. This is similar to the honeycomb structured body constituted by the honeycomb fired bodies according to the first embodiment of the present invention illustrated in Figs. 5 (a) and 5 (b). Here, the peripheral coat layer may be formed if necessary.

Fig. 11(a) is a front view illustrating one example of the honeycomb fired body positioned at the outermost periphery of the honeycomb structured body including the honeycomb fired bodies menufactured by the method for cutting a honeycomb molded body according to the fourth embodiment of the present invention. Fig. 11(b) is a front view illustrating another example of the honeycomb fired body positioned at the outermost periphery of the honeycomb structured body including the honeycomb fired bodies produced by the method for cutting a honeycomb molded body of the fourth embodiment of the present invention.

In Figs. 11 (a) and 11 (b), the peripheral coat layer is not illustrated but solidified substances (425 and 435) of a peripheral coat material paste filled in cells are illustrated.

As illustrated in Fig. 11 (a), the cross section of the outer honeycomb fired body 420 has a shape surrounded by three line segments and one arc.

Moreover, as illustrated in Fig. 11 (b) the cross section of the outer honeycomb fired body 430 has a shape surrounded by two line segments and one arc.

Also in the present embodiment, the effects (1) to (4) mentioned in the first embodiment of the present invention are exerted.

(Other Embodiments)

The porosity of the honeycomb fired body constituting the honeycomb structured body of the present invention is not particularly limited and is preferably 35% to 60%.

If the porosity of the honeycomb fired body is less than 35%, the honeycomb structured body of the present invention is easily clogged when used as a filter. On the other hand, if the porosity of the honeycomb fired body is more than 60%, the strength of the honeycomb fired body is lowered, leading to easy breakage.

The average pore size of the honeycomb fired body is preferably 5 to 30 $\mu$m.

If the average pore size of the honeycomb fired body is less than 5 $\mu$m, the honeycomb structured body of the present invention is easily clogged when used as a filter. On the other hand, if the average pore size of the honeycomb fired body is more than 30 $\mu$m, particulates in exhaust gases may pass through the pores and the honeycomb structure cannot collect the particulates to fail to function as a filter.

Here, the porosity and the average pore size of the honeycomb fired body can be measured by a conventionally known mercury porosimetry.

The cell density in the cross section vertical to the longitudinal direction of the honeycomb fired body is not particularly limited. Preferably, the lower limit is 31.0 pcs/cm$^2$ (200 pcs/in$^2$) and the upper limit is 93.0 pcs/cm$^2$ (600 pcs/in$^2$). More preferably, the lower limit is 38.8 pcs/cm$^2$ (250 pcs/in$^2$) and the upper limit is 77.5 pcs/cm$^2$ (500 pcs/in$^2$),

In each of the first to fourth embodiments of the present invention, a description is given on the honeycomb structured body to be used as a filter for exhaust gas purification, in which either end of each cell is sealed with a sealing material. However, the honeycomb structured body according to the present invention is not limited to this. In the honeycomb structured body, both end portions of the cells may not be sealed. Such a honeycomb structured body may be used as a catalyst carrier for supporting a catalyst on cell walls.

EXPLANATION OF SYMBOLS

| | |
|---|---|
| 100 | Honeycomb molded body |
| 100a | Side face of honeycomb molded body |
| 101a, 101b, 111a, 111b, 121a, 121b, 131a, 131b, 221, 222, 322, 411a, 411b, 421, 431 | Cell |
| 112a, 112b, 412 | Sealing material |
| 103, 113, 223, 323, 413, 423 | Cell wall |
| 104, 114, 124, 134, 224, 324, 414, 424, 434 | Peripheral wall |
| 105 | Linear section as one side of the end face of honeycomb molded body |
| 14 | Cut guide groove |
| 15 | Wire |
| 110, 120, 130, 210, 220, 320, 410, 420, 430 | Honeycomb fired body |
| 10, 200, 300 | Honeycomb structured body |
| 11, 201, 301 | Adhesive layer |
| 12, 202, 302 | Peripheral coat layer |
| 13, 203, 303 | Honeycomb block |

**Claims**

1. A method for cutting a honeycomb molded body (100) being a pillar-shaped honeycomb molded body that is made of a material including silicon carbide, is manufactured by extrusion molding, and has a large number of cells (101a, 101b, 111a, 111b, 121a, 121b, 131a, 131b, 221, 222, 322, 411a, 411b, 421, 431) placed in parallel with one another in a longitudinal direction with a cell wall (103, 113, 223, 323, 413, 423) interposed therebetween and a peripheral wall (104, 114, 124, 134, 224, 324, 414, 424, 434) formed on each side face, to a predetermined length in a direction vertical to the longitudinal direction, the method comprising the steps of:

forming a cut guide groove (14) on the periphery of the honeycomb molded body (100) by applying laser in a wavelength range of 0.7 to 2.5 μm; and
cutting the honeycomb molded body along the cut guide groove with a wire( 15).

2. The method for cutting a honeycomb molded body according to claim 1,
wherein
the laser is fiber laser.

3. The method for cutting a honeycomb molded body according to claim 1 or 2,
wherein
the cut guide groove (14) is formed only to a depth corresponding to the peripheral wall (104, 114, 124, 134, 224, 324, 414, 424, 434).

4. The method for cutting a honeycomb molded body according to claim 1 or 2,
wherein
the cut guide groove (14) is formed to a depth corresponding to the peripheral wall (104, 114, 124, 134, 224, 324, 414, 424, 434) and at least one cell wall (103, 113, 223, 323, 413, 423).

5. The method for cutting a honeycomb molded body according to any one of claims 1 to 4,
wherein
the peripheral wall (104, 114, 124, 134, 224, 324, 414, 424, 434) has a thickness of 0.2 to 0.5 mm.

6. The method for cutting a honeycomb molded body according to any one of claims 1 to 5,
wherein
the cell wall (103, 113, 223, 323, 413, 423) has a thickness of 0.1 mm or more and less than 0.2 mm.

7. The method for cutting a honeycomb molded body according to any one of claims 1 to 6,
wherein
the cut guide groove (14) has a width of 0.5 to 1.0 mm.

8. The method for cutting a honeycomb molded body according to any one of claims 1 to 7,
wherein
the wire (15) has a length of a diameter of 5% to 20% of the length of the width of the cut guide groove (14).

9. The method for cutting a honeycomb molded body according to any one of claims 1 to 8,
wherein
the diameter of the wire (15) is 0.05 to 0.10 mm.

10. The method for cutting a honeycomb molded body according to any one of claims 1 to 9,
wherein
the honeycomb molded body (100) has a cross-sectional shape including at least one linear section (105) in a direction vertical to the longitudinal direction.

11. The method for cutting a honeycomb molded body according to claim 10,
wherein
the cross-sectional shape of the honeycomb molded body (100) is quadrangle in a direction vertical to the longitudinal direction.

12. A method for manufacturing a honeycomb structured body (10, 200, 300) having a plurality of honeycomb fired bodies (110, 120, 130, 210, 220, 320, 410, 420, 430) bound with one another via an adhesive layer (11, 201, 301) formed on each side face, the honeycomb fired bodies being obtained by firing of honeycomb molded bodies (100) each having a large number of cells (101a, 101b, 111a, 111b, 121a, 121b, 131a, 131b, 221, 222, 322, 411a, 411b, 421, 431) placed in parallel with one another in a longitudinal direction, the method comprising:

utilizing the method for cutting a honeycomb molded body (100) according to any one of claims 1 to 11 in cutting a honeycomb molded body (100) to a predetermined length.

13. The method for producing a honeycomb structured body (10, 200, 300) according to claim 12, wherein
the honeycomb structured body (10, 200, 300) has a coat layer (12, 202, 302) formed on a peripheral portion.

**Patentansprüche**

1. Verfahren zum Schneiden eines Waben-Formkörpers (100), der ein säulenförmiger Waben-Formkörper ist, welcher aus einem Material hergestellt ist, das Siliziumcarbid umfasst, durch Extrusionsformen hergestellt ist und eine große Anzahl von Zellen (101a, 101b, 111a, 111b, 121a, 121b, 131a, 131b, 221, 222, 322, 411a, 411b, 421, 431) aufweist, die in Längsrichtung parallel zueinander vorgesehen sind, wobei hierzwischen eine Zellenwand (103, 113, 223, 323, 413, 423) vorgesehen ist und eine äußere Wand (104, 114, 124, 134, 224, 324, 414, 424, 434) auf jeder Seitenfläche gebildet ist, zu einer vorbestimmten Länge in einer Richtung senkrecht zur Längsrichtung, wobei das Verfahren die Schritte umfasst:

Bilden einer Schneide-Führungsvertiefung (14) auf dem Äußeren des Waben-Formkörpers (100) durch Anwenden eines Lasers im Wellenlängenbereich von 0,7 bis 2,5 $\mu$m; und
Schneiden des Waben-Formkörpers entlang der Schneide-Führungsvertiefung mit einem Draht (15).

2. Verfahren zum Schneiden eines Waben-Formkörpers gemäß Anspruch 1, worin der Laser ein Faserlaser ist.

3. Verfahren zum Schneiden eines Waben-Formkörpers gemäß Anspruch 1 oder 2, worin die Schneide-Führungsvertiefung (14) nur bis zu einer Tiefe gebildet ist, die der äußeren Wand (104, 114, 124, 134, 224, 324, 414, 424, 434) entspricht.

4. Verfahren zum Schneiden eines Waben-Formkörpers gemäß Anspruch 1 oder 2, worin die Schneide-Führungsvertiefung (14) bis zu einer Tiefe gebildet ist, die der äußeren Wand (104, 114, 124, 134, 224, 324, 414, 424, 434) und mindestens einer Zellenwand (103, 113, 223, 323, 413, 423) entspricht.

5. Verfahren zum Schneiden eines Waben-Formkörpers gemäß irgendeinem der Ansprüche 1 bis 4, worin die äußere Wand (104, 114, 124, 134, 224, 324, 414, 424, 434) eine Dicke von 0,2 bis 0,5 mm aufweist.

6. Verfahren zum Schneiden eines Waben-Formkörpers gemäß irgendeinem der Ansprüche 1 bis 5, worin die Zellenwand (103, 113, 223, 323, 413, 423) eine Dicke von 0,1 mm oder größer und kleiner als 0,2 mm aufweist.

7. Verfahren zum Schneiden eines Waben-Formkörpers gemäß irgendeinem der Ansprüche 1 bis 6, worin die Schneide-Führungsvertiefung (14) eine Breite von 0,5 bis 1,0 mm aufweist.

8. Verfahren zum Schneiden eines Waben-Formkörpers gemäß irgendeinem der Ansprüche 1 bis 7, worin der Draht (15) eine Länge des Durchmesser von 5 % bis 20 % der Länge der Breite der Schneide-Führungsvertiefung (14) aufweist.

9. Verfahren zum Schneiden eines Waben-Formkörpers gemäß irgendeinem der Ansprüche 1 bis 8, worin der Durchmesser des Drahts (15) 0,05 bis 0,10 mm beträgt.

10. Verfahren zum Schneiden eines Waben-Formkörpers gemäß irgendeinem der Ansprüche 1 bis 9, worin der Waben-Formkörper (100) eine Querschnittsform aufweist, die zumindest einen linearen Bereich (105) in einer Richtung senkrecht zur Längsrichtung umfasst.

11. Verfahren zum Schneiden eines Waben-Formkörpers gemäß Anspruch 10, worin die Querschnittsform des Waben-Formkörpers (100) in einer Richtung senkrecht zur Längsrichtung viereckig ist.

12. Verfahren zur Herstellung eines strukturierten Wabenkörpers (10, 200, 300), der eine Vielzahl von gebrannten Wabenkörpers (110, 120, 130, 210, 220, 320, 410, 420, 430) aufweist, die miteinander über eine Adhäsivschicht (11, 201, 301), die auf jeder Seitenfläche gebildet ist, verbunden sind, worin die gebrannten Wabenkörper erhalten sind durch Brennen von Waben-Formkörpern (100), die jeweils eine große Anzahl von Zellen (101a, 101b, 111a, 111b, 121a, 121b, 131a, 131b, 221, 222, 322, 411a, 411b, 421, 431) aufweisen, die in Längsrichtung parallel zueinander angeordnet sind, wobei das Verfahren umfasst:

Einsetzen des Verfahrens zum Schneiden eines Waben-Formkörpers (100) gemäß irgendeinem der Ansprüche 1 bis 11 beim Schneiden eines Waben-Formkörpers (100) zu einer vorbestimmten Länge.

13. Verfahren zur Herstellung eines strukturierten Wabenkörpers (10, 200, 300) gemäß Anspruch 12, worin der strukturierte Wabenkörper (100, 200, 300) eine Überzugsschicht (12, 202, 302) aufweist, die auf einem äußeren Bereich gebildet ist.

## Revendications

1. Un procédé de découpage d'un corps moulé en nid d'abeille (100) étant un corps moulé en nid d'abeille sous forme de colonne qui est constitué d'un matériau incluant du carbure de silicium, est fabriqué par moulage par extrusion, et ayant un grand nombre de cellules (101a, 101b, 111a, 111b, 121a, 121b, 131a, 131b, 221, 222, 322, 411a, 411b, 421, 431) placées en parallèle les unes des autres dans une direction longitudinale à une paroi cellulaire (103, 113, 223, 323, 413, 423) interposée entre elles et une paroi périphérique (104, 114, 124, 134, 224, 324, 414, 424, 434) formée sur chaque face latérale, à une longueur prédéterminée verticalement à la direction longitudinale, la méthode comprenant les étapes de:

formation d'une rainure de guidage de coupe (14) sur la périphérie du corps moulé en nid d'abeille (100) en appliquant un laser dans une plage de longueur d'onde de 0.7 à 2.5 $\mu$m ; et
découpage du corps moulé en nid d'abeille le long de la rainure de guidage de coupe avec un fil (15).

2. Le procédé de découpage d'un corps moulé en nid d'abeille selon la revendication 1,
dans lequel
le laser est un laser à fibre.

3. Le procédé de découpage d'un corps moulé en nid d'abeille selon la revendication 1 ou 2,
dans lequel
la rainure de guidage de coupe (14) est formée seulement à une profondeur correspondant à la paroi périphérique (104, 114, 124, 134, 224, 324, 414, 424, 434).

4. Le procédé de découpage d'un corps moulé en nid d'abeille selon la revendication 1 ou 2,
dans lequel
la rainure de guidage de coupe (14) est formée à une profondeur correspondant à la paroi périphérique (104, 114, 124, 134, 224, 324, 414, 424, 434) et au moins une paroi cellulaire (103, 113, 223, 323, 413, 423).

5. Le procédé de découpage d'un corps moulé en nid d'abeille selon l'une quelconque des revendications 1 à 4,
dans lequel
la paroi périphérique (104, 114, 124, 134, 224, 324, 414, 424, 434) a une épaisseur de 0.2 à 0.5 mm.

6. Le procédé de découpage d'un corps moulé en nid d'abeille selon l'une quelconque des revendications 1 à 5,
dans lequel
la paroi cellulaire (103, 113, 223, 323, 413, 423) a une épaisseur de 0.1 mm ou plus et inférieure à 0.2 mm.

7. Le procédé de découpage d'un corps moulé en nid d'abeille selon l'une quelconque des revendications 1 à 6,
dans lequel
la rainure de guidage de coupe (14) a une largeur de 0.5 à 1.0 mm.

8. Le procédé de découpage d'un corps moulé en nid d'abeille selon l'une quelconque des revendications 1 à 7,
dans lequel
le fil (15) a une longueur d'un diamètre de 5% à 20% de la longueur en largeur de la rainure de guidage de coupe (14).

9. Le procédé de découpage d'un corps moulé en nid d'abeille selon l'une quelconque des revendications 1 à 8,
dans lequel

le diamètre du fil (15) est de 0.05 à 0.10 mm.

10. Le procédé de découpage d'un corps moulé en nid d'abeille selon l'une quelconque des revendications 1 à 9, dans lequel
le corps moulé en nid d'abeille (100) a une forme en coupe transversale incluant au moins une section linéaire (105) verticalement à la direction longitudinale.

11. Le procédé de découpage d'un corps moulé en nid d'abeille selon la revendication 10, dans lequel
la forme en coupe transversale du corps moulé en nid d'abeille (100) est un quadrilatère verticalement à la direction longitudinale.

12. Un procédé de fabrication d'un corps structuré en nid d'abeille (10, 200, 300) ayant une pluralité de corps en nid d'abeille cuits (110, 120, 130, 210, 220, 320, 410, 420, 430) liés les uns aux autres par une couche adhésive (11, 201, 301) formée sur chaque face latérale, les corps en nid d'abeille cuits étant obtenus en cuisant des corps moulés en nid d'abeille (100) ayants chacun un grand nombre de cellules (101a, 101b, 111a, 111b, 121a, 121b, 131a, 131b, 221, 222, 322, 411a, 411b, 421, 431) placées en parallèle les unes des autres dans une direction longitudinale, le procédé comprenant:

l'utilisation du procédé de découpage d'un corps moulé en nid d'abeille (100) selon l'une quelconque des revendications 1 à 11 en découpant un corps moulé en nid d'abeille (100) à une longueur prédéterminée.

13. Le procédé de fabrication d'un corps structuré en nid d'abeille (10, 200, 300) selon la revendication 12, dans lequel
le corps structuré en nid d'abeille (10, 200, 300) a une couche de revêtement (12, 202, 302) formée sur une portion périphérique.

# FIG.1

(a)

(b)

A-A line cross-sectional view

# FIG.2

(a)

(b)

## FIG.3
### (a)

### (b)

B–B line cross-sectional view

# FIG.4

(a)

(b)

E-E line cross-sectional view

# FIG.5

(a)

(b)

F-F line cross-sectional view

# FIG.6

(a)

(b)

FIG.7

FIG.8

(a)

(b)

G-G line cross-sectional view

# FIG.9

(a)

320

324
322
321a

321b
323
321c

(b)

300

302
320
303
301

## FIG.10

(a)

(b)

H-H line cross-sectional view

# FIG.11

(a)

(b)

**EP 2 565 002 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2315508 A1
- JP 3926087 B
- JP 2001096524 A